(19) Europäisches Patentamt / European Patent Office / Office européen des brevets

(11) **EP 4 342 927 B1**

(12) **EUROPEAN PATENT SPECIFICATION**


(45) Date of publication and mention of the grant of the patent:
**18.03.2026 Bulletin 2026/12**

(21) Application number: **22804759.3**

(22) Date of filing: **19.05.2022**

(51) International Patent Classification (IPC):
***C08G 64/02*** *(2006.01)* ***C14C 9/00*** *(2006.01)*
***D06N 3/14*** *(2006.01)* ***C08G 18/00*** *(2006.01)*
***C08G 18/08*** *(2006.01)* ***C08G 18/10*** *(2006.01)*
***C08G 18/30*** *(2006.01)* ***C08G 18/32*** *(2006.01)*
***C08G 18/34*** *(2006.01)* ***C08G 18/44*** *(2006.01)*
***C08G 18/65*** *(2006.01)* ***C08G 18/22*** *(2006.01)*
***C08G 18/42*** *(2006.01)* ***C08G 18/66*** *(2006.01)*
***C08G 18/70*** *(2006.01)* ***C08G 18/73*** *(2006.01)*
***C09D 175/06*** *(2006.01)* ***C14C 11/00*** *(2006.01)*
***C08G 18/12*** *(2006.01)* ***C08G 18/75*** *(2006.01)*
***C08G 64/30*** *(2006.01)*

(52) Cooperative Patent Classification (CPC):
(C-Sets available)
**C08G 64/0208; C08G 18/0823; C08G 18/12; C08G 18/227; C08G 18/3206; C08G 18/3234; C08G 18/348; C08G 18/4202; C08G 18/4277; C08G 18/44; C08G 18/664; C08G 18/6659; C08G 18/706; C08G 18/73; C08G 18/755;** (Cont.)

(86) International application number:
**PCT/JP2022/020865**

(87) International publication number:
**WO 2022/244850 (24.11.2022 Gazette 2022/47)**


(54) **POLYURETHANE RESIN COMPOSITION, CURED PRODUCT, ARTIFICIAL LEATHER, SYNTHETIC LEATHER, AND SURFACE TREATMENT AGENT FOR LEATHER**

POLYURETHANHARZZUSAMMENSETZUNG, GEHÄRTETES PRODUKT, KUNSTLEDER, KUNSTLEDER UND OBERFLÄCHENBEHANDLUNGSMITTEL FÜR LEDER

COMPOSITION DE RÉSINE DE POLYURÉTHANNE, OBJET DURCI, CUIR ARTIFICIEL, CUIR SYNTHÉTIQUE ET AGENT DE TRAITEMENT DE SURFACE POUR CUIR


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2021 JP 2021084324**
**16.06.2021 JP 2021099841**
**31.03.2022 JP 2022059722**

(43) Date of publication of application:
**27.03.2024 Bulletin 2024/13**



(73) Proprietor: **Tosoh Corporation**
**Yamaguchi 746-8501 (JP)**

(72) Inventors:
- **HONDA Kohei**
**Yokkaichi-shi, Mie 510-8540 (JP)**
- **ANZAI Hironao**
**Yokkaichi-shi, Mie 510-8540 (JP)**
- **SHIGEYASU Shinji**
**Yokkaichi-shi, Mie 510-8540 (JP)**

(74) Representative: **TBK**
**Bavariaring 4-6**
**80336 München (DE)**



(56) References cited:
**WO-A1-2016/039395** **WO-A1-2016/039396**
**JP-A- 2019 006 936** **JP-A- 2021 070 799**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 4 342 927 B1

**JP-A- 2021 070 799** **US-A1- 2018 030 650**

(52) Cooperative Patent Classification (CPC): (Cont.)
**C08G 64/305; C09D 175/06; C14C 11/006; D06N 3/14; D06N 3/146**

C-Sets
**C08G 18/12, C08G 18/3234;**
**C08G 18/12, C08G 18/3271**

## Description

### Technical Field

The present disclosure relates to a polyurethane resin composition, a cured product, artificial leather, synthetic leather, and a surface treatment agent for leather.

### Background Art

Polycarbonate-based polyurethane resin compositions are advantageous for hydrolysis resistance, heat resistance, wear resistance, chemical resistance, and the like, and are therefore used in artificial leather, synthetic leather, natural leather, and the like.

Here, Patent Literature 1 discloses a method for producing a polyurethane emulsion for an aqueous one-pack coating agent, the method including reacting an organic diisocyanate (a1), a polymer polyol (a2) having a carbonate skeleton, and a carboxyl group-containing low-molecular-weight glycol (a3) with each other, producing a carboxyl group-containing isocyanate group-terminated urethane prepolymer (A), mixing the produced carboxyl group-containing isocyanate group-terminated urethane prepolymer with a nonionic polar group-containing polyisocyanate (B), and neutralizing the carboxyl group in the system using a neutralizer (C), followed by emulsifying the mixture in water to cause a reaction with water.

Patent Literature 2 discloses a polyurethane resin aqueous dispersion and a method for producing polyurethane resin aqueous dispersion. In particular, a method for producing a polyurethane resin aqueous dispersion which is excellent in mechanical strength and heat resistance is provided. A polyurethane resin aqueous dispersion contains a polyurethane resin obtained by reacting an urethane prepolymer having an isocyanate group with a chain extender. The urethane prepolymer having the isocyanate group is an urethane prepolymer having an isocyanate group obtained by reacting an active hydrogen component containing polymer polyol and a compound having an anionic group or a cationic group and an active hydrogen group, with an organic polyisocyanate component. A number average molecular weight of the polyurethane resin (U) is 40,000-1,000,000, and 90 mol% or more of the organic polyisocyanate component (B) is 4,4-diphenylmethane diisocyanate.

### Citation List

#### Patent Literature

[Patent Literature 1] Japanese Unexamined Patent Publication No. 2005-247897
[Patent Literature 2] JP 2021 070799 A

### Summary of Invention

#### Technical Problem

However, the polyurethane emulsion disclosed in Patent Literature 1 does not have well-balanced mechanical properties compared to solvent-based polyurethane resins, and an improvement in 100% modulus is required. In addition, the polyurethane emulsion according to Patent Literature 1 has room for improvement in terms of shape stability when exposed to a high-temperature environment.

Therefore, one aspect of the present disclosure is directed to providing a cured product having a low 100% modulus and a high softening temperature, and a polyurethane resin composition capable of forming a cured product. One aspect of the present disclosure is directed to providing artificial leather or synthetic leather and a surface treatment agent for leather containing the cured product of the above-described polyurethane resin composition.

#### Solution to Problem

The invention is described in the enclosed independent claims and beneficial embodiments thereof are described in the enclosed dependent claims. Aspects of the present disclosure include embodiments shown below.

## Advantageous Effects of Invention

According to one aspect of the present disclosure, it is possible to provide a cured product having a low 100% modulus and a high softening temperature, and a polyurethane resin composition capable of forming the cured product. According to one aspect of the present disclosure, it is possible to provide artificial leather or synthetic leather and a surface treatment agent for leather containing the cured product of the above-described polyurethane resin composition.

## Description of Embodiments

Exemplary embodiments for implementing aspects of the present disclosure will be further described in detail. However, the present disclosure is not limited to the following embodiments.

A numerical range indicated using "to" in the present specification indicates a range including numerical values denoted before and after "to" as a minimum value and a maximum value. In the numerical ranges described in the present specification, upper limit values or lower limit values of the numerical ranges may be replaced with values shown in examples. In addition, upper limit values and lower limit values denoted individually can be arbitrarily combined. The term "cured product" in the present specification includes the form of a cured film. In addition, the term "cured product" in the present specification includes both those cured through cross-linking or the like and those cured through solidification due to volatilization of a solvent.

The polyurethane resin composition according to an aspect of the present disclosure contains a reaction product of an isocyanate group-terminated urethane prepolymer (E) and a chain extender (G), and a neutralizer (F). The isocyanate group-terminated urethane prepolymer (E) contains a reaction product of a polyol (A), an organic acid (C), and a polyisocyanate (D). A total content of urea groups in the polyurethane resin composition is 0.01 to 0.80 mmol/g with respect to a sum of a mass of the isocyanate group-terminated urethane prepolymer (E) and a mass of the chain extender (G), and the polycarbonate polyol (B) has a deemed average number of functional groups of 2.0 to 3.90. The polyurethane resin composition according to the aspect of the present disclosure may further contain a curing agent.

Hereinafter, components that can be contained in the polyurethane resin composition will be described.

[Isocyanate group-terminated urethane prepolymer (E)]

The isocyanate group-terminated urethane prepolymer (E) contains a reaction product of a polyol (A), an organic acid (C), and a polyisocyanate (D).

<Polyol (A)>

A polyol (A) contains a polycarbonate polyol (B) having an average number of hydroxyl functional groups exceeding 2. The polyol (A) may contain the polycarbonate polyol (B) and a polyol (B') different from the polycarbonate polyol (B), or may contain only the polycarbonate polyol (B).

(Polycarbonate polyol (B))

Examples of polycarbonate polyols (B) include polycarbonate polyols (α) and (β) below and any combination of two or more thereof.

(α) is a polycarbonate polyol (hereinafter also referred to as a polycarbonate polyol (α)) which is a transesterification product of a diol (b-1), a polyhydric alcohol (b-2), and a carbonic acid ester (b-3).

(β) is a polycarbonate polyol (hereinafter also referred to as a polycarbonate polyol (β)) which is a transesterification product of a diol (b-1), a polyhydric alcohol (b-2), and a polycarbonate polyol (b-4).

Examples of diols (b-1) include: aliphatic diols such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, and dimer acid diols; aromatic diols such as ethylene oxide or propylene oxide adducts of bisphenol A, bis(β-hydroxyethyl)benzene, and xylylene glycol; and any combination of two of these. Among these, diols having 2 to 9 carbon atoms are preferable. In addition, aliphatic diols are preferable, and 1,4-butanediol, 1,5-pentanediol, 1,6-hexanediol, and 1,9-nonanediol are more preferable. These may be used alone or in combination of two or more thereof.

Examples of polyhydric alcohols (b-2) having three or more hydroxyl functional groups include trimethylolpropane, trimethylolethane, glycerol, pentaerythritol, dipentaerythritol, sorbitol, and any combination of two of these. Among

these, trimethylolpropane, trimethylolethane, and pentaerythritol are preferable.

Examples of carbonic acid esters (b-3) include: dialkyl carbonates such as dimethyl carbonate, diethyl carbonate, methyl ethyl carbonate, dipropyl carbonate, and dibutyl carbonate; cyclic alkylene carbonates such as ethylene carbonate and propylene carbonate; diaryl carbonates such as diphenyl carbonate, dinaphthyl carbonate, dianthryl carbonate, diphenanthryl carbonate, diindanyl carbonate, and tetrahydronaphthyl carbonate; and any combination of two or more thereof. From the viewpoints of easy availability and ease of setting conditions for polymerization reactions, dimethyl carbonate, diethyl carbonate, diphenyl carbonate, dibutyl carbonate, and ethylene carbonate are preferably used.

The polycarbonate polyol (b-4) is a polycarbonate polyol having two or more hydroxyl functional groups, and may be a polycarbonate polyol (b-4-1) having two hydroxyl functional groups (that is, polycarbonate diol), a polycarbonate polyol (b-4-2) having three or more hydroxyl functional groups, or a combination of two or more selected from the polycarbonate polyol (b-4-1) and the polycarbonate polyol (b-4-2).

Examples of polycarbonate polyols (b-4-1) include those obtained by reacting carbonic acid esters with diols.

Examples of carbonic acid esters include the same ones as those exemplified in the description of the above-described carbonic acid esters.

Examples of diols include the same ones as those exemplified in the description of the above-described diols. Among these, ethylene glycol, 1,3-propanediol, 1,4-butanediol, 1,5-pentanediol, 1,6-hexanediol, 1,9-nonanediol, 3-methyl-1,5-pentanediol, and 2-methyl-1,8-octanediol are preferable.

Examples of polycarbonate polyols (b-4-2) include those obtained by reacting carbonic acid esters, diols, and polyhydric alcohols having three or more hydroxyl functional groups with each other. Examples of carbonic acid esters include the same ones as those exemplified in the description of the above-described carbonates.

Examples of glycols include the same ones as those exemplified in the description of the above-described diols. Among these, ethylene glycol, 1,3-propanediol, 1,4-butanediol, 1,5-pentanediol, 1,6-hexanediol, 1,9-nonanediol, 3-methyl-1,5-pentanediol, and 2-methyl-1,8-octanediol are preferable.

Examples of polyhydric alcohols (b-2) having three or more hydroxyl functional groups include trimethylolpropane, trimethylolethane, glycerol, pentaerythritol, sorbitol, and any combination of two or more thereof.

Considering ease of synthesis and handling, the number average molecular weight of the polycarbonate polyol (b-4) is preferably 400 to 5,000 g/mol and more preferably 500 to 3,000 g/mol. The details of a method for measuring the number average molecular weight may be as described in the examples described below.

The molar ratio (diol (b-1)/polyhydric alcohol (b-2)) of a diol (b-1) to a polyhydric alcohol (b-2) having three or more hydroxyl functional groups is preferably 1/5 to 60/1 and more preferably within a range of 1/3 to 40/1. By using a polyhydric alcohol having three or more hydroxyl functional groups below the above-described upper limit value, gelation due to cross-linking during a polymerization reaction of a polycarbonate is more likely to be suppressed. In addition, by using a polyhydric alcohol (b-2) below the above-described upper limit value, the texture tends to be further improved. By setting the molar ratio of the diol (b-1) to the polyhydric alcohol (b-2) having three or more hydroxyl functional groups to be within the above-described ranges, the polycarbonate polyol (B) can be efficiently obtained, and the texture, the mechanical strength, and a high softening temperature can be achieved at the same time when a polyurethane is made.

The mixing ratio between total content of the diol (b-1) and the polyhydric alcohol (b-2) and the carbonic acid ester (b-3) is not particularly limited, but the molar ratio of (total content of diol (b-1) and polyhydric alcohol (b-2)):carbonic acid ester (b-3) is preferably 1:3 to 3:1 and more preferably 1:2.5 to 2.5:1. By setting the mixing ratio as above, a desired polycarbonate polyol can be more efficiently obtained.

The mixing ratio between total content of the diol (b-1) and the polyhydric alcohol (b-2) and the polycarbonate polyol (b-4) is not particularly limited, but the molar ratio of (total content of diol (b-1) and polyhydric alcohol (b-2)):polycarbonate polyol (b-1) is preferably 1:50 to 50:1 and more preferably 1:30 to 30:1. By setting the mixing ratio as above, a desired polycarbonate polyol can be more efficiently obtained.

(Catalyst)

A catalyst is preferably used when producing a polycarbonate polyol ($\alpha$). Examples of catalysts include well-known transesterification catalysts. Examples of catalysts include: metal alkoxides such as lithium methoxide, sodium methoxide, sodium ethoxide, potassium methoxide, and potassium ethoxide; metal enolates such as lithium acetylacetonate, aluminum acetylacetonate, and zirconium acetylacetonate; metal carbonates such as lithium carbonate, sodium carbonate, and potassium carbonate; metal hydroxides such as lithium hydroxide, sodium hydroxide, and potassium hydroxide; metal carboxylates such as lithium acetate, sodium acetate, and potassium acetate; tertiary alkylamines such as trimethylamine, triethylamine, diisopropylethylamine, and tributylamine; cyclic azines such as pyridine, pyrazine, and quinoline; tertiary cyclic amines such as N-methylpyrrolidine, N-methylpiperidine, N,N'-dimethylpiperazine, N-methylmorpholine, diazabicycloundecene, 1,4-diazabicyclo[2.2.2]octane, and 1,8-diazabicyclo[5.4.0]undecene; phosphazenes such as t-butyliminotris(dimethylamino)phosphorane (P1-t-Bu), t-butyliminotri(pyrrolidino)phosphorane, t-octyliminotris(dimethylamino)phosphorane (P1-t-Oct), 1-t-butyl-2,2,4,4,4-pentakis(dimethylamino)-2λ$^5$,4λ$^5$-catenadi(phosphazene) (P2-t-Bu), 1-ethyl-2,2,4,4,4-pentakis(dimethylamino)-2λ$^5$,4λ$^5$-catenadi(phosphazene), 1-t-butyl-4,4,4-tris(dimethylamino)-2,2-bis[tris(dimethylamino)phosphoranylideneamino]-2λ$^5$,4λ$^5$-catenadi(phosphazene) (P4-t-Bu), 1-tert-octyl-4,4,4-tris(dimethylamino)-2,2,-bis[tris(dimethylamino)phosphoranylideneamino]-2λ$^5$,4λ$^5$-catenadi(phosphazene) (P4-t-Oct); and any combination of two or more thereof. Among these, potassium hydrogen carbonate, sodium hydrogen carbonate, lithium acetate, lithium acetylacetonate, and P4-t-Bu are preferable because in this case the yield of the polycarbonate polyol is further improved.

The content of a transesterification catalyst in the mixed liquid may be 0.0001 to 0.1 parts by mass or 0.0005 to 0.01 parts by mass based on 100 parts by mass of the total amount of diol (B-1), polyhydric alcohol (b-2), and carbonic acid ester (b-3) in the mixed liquid from the viewpoints of ease of appropriate control of the reaction temperature and being able to further suppress an increase in color number of a reaction product. The content of the transesterification catalyst is preferably as small as possible from the viewpoint of further facilitating control of reactivity of a urethanization reaction. If the content of the transesterification catalyst increases, the reactivity of the urethanization reaction is likely to increase. The content of the transesterification catalyst in the mixed liquid is preferably 0.001 parts by mass or more, more preferably 0.002 parts by mass or more, and still more preferably 0.003 parts by mass or more based on 100 parts by mass of the total amount of polyhydric alcohol (b-2), diol (b-1), and carbonic acid ester (b-3) in the mixed liquid from the viewpoint of further facilitating the control of the urethanization reaction. The content of the transesterification catalyst in the mixed liquid is preferably 0.050 parts by mass or less, more preferably 0.040 parts by mass or less, and still more preferably 0.030 parts by mass or less based on 100 parts by mass of the total amount of polyhydric alcohol (b-2), diol (b-1), and carbonic acid ester (b-3) in the mixed liquid from the viewpoint of further suppressing the increase in color number of a reaction product. From these viewpoints, the content of a transesterification catalyst in the mixed liquid is preferably 0.001 to 0.050 parts by mass, more preferably 0.002 to 0.040 parts by mass, and still more preferably 0.003 to 0.030 parts by mass based on 100 parts by mass of the total amount of polyhydric alcohol (b-2), diol (b-1), and carbonic acid ester (b-3) in the mixed liquid.

The heating temperature (reaction temperature) of the mixed liquid may be, for example, 80°C to 250°C or 100°C to 220°C. If the reaction temperature is 80°C or higher, the transesterification reaction is more likely to progress, and a desired polycarbonate polyol is more likely to be obtained. If the reaction temperature is 250°C or lower, the color number of the resulting polycarbonate polyol and a composition containing the polycarbonate polyol is further suppressed. In addition, the transesterification reaction may be performed while keeping the temperature constant or may be performed while increasing the temperature stepwise or continuously depending on the progress degree of the reaction. At this time, the progress of the reaction can be accelerated by distilling off a produced alcohol or diol.

The mixed liquid can be heated under normal pressure, but can also be heated under reduced pressure (for example, under a pressure of 101 to 0.1 kPa) in the latter half of the reaction. Accordingly, the distillation rate of the resulting distillate can be increased, and the progress of the reaction can be accelerated. In the present specification, normal pressure means a pressure of 101.325 kPa±20.000 kPa. From the viewpoint of making it easier to obtain a desired polycarbonate polyol, the heating of the mixed liquid preferably includes heating under a pressure of 101.325 kPa±20.000 kPa (first heating) and then heating under reduced pressure of 10.000 kPa or lower (second heating).

(Catalyst)

A catalyst is preferably used when producing a polycarbonate polyol (β). Examples of catalysts include the same ones as those exemplified in the description of the production of the polycarbonate polyol (α). Among these, potassium hydrogen carbonate, sodium hydrogen carbonate, lithium acetate, lithium acetylacetonate, and P4-t-Bu are preferable because in this case the yield of the polycarbonate polyol is further improved.

The amount of catalyst used may be 0.0001 to 1 mass% of a diol (b-1), a polyhydric alcohol (b-2), and a polycarbonate polyol (b-4), preferably 0.001 to 0.1 mass%. In a case where the amount of catalyst is greater than or equal to a lower limit value, it is possible to further suppress the reaction time from becoming longer, and therefore a resulting polycarbonate polyol is even less likely to be colored. In a case where the amount of catalyst is lower than or equal to the upper limit value, the turbidity tends to be further suppressed.

The reaction temperature of the transesterification reaction is preferably 70°C to 250°C and more preferably 80°C to 220°C.

The lower limit of the deemed average number of functional groups of the polycarbonate polyol (B) may be, for example, 2.0 or more, 2.1 or more, 2.2 or more, 2.3 or more, 2.4 or more, or 2.5 or more. The upper limit of the deemed average number of functional groups of the polycarbonate polyol (B) may be, for example, 3.90 or less, 3.80 or less, 3.70 or less, 3.60 or less, 3.50 or less, or 3.40 or less. The deemed average number of functional groups is 2.0 to 3.90, and may be, for example, 2.1 to 3.80, 2.2 to 3.70, 2.3 to 3.50, or 2.5 to 3.40. If the deemed average number of functional groups is 3.90 or less, the elongation at break in a tensile test will be further improved, and if the deemed average number of functional groups is 2.0 or more, the softening temperature and the strength at break in a tensile test will tend to be further improved.

The deemed average number of functional groups is defined by the following equation.

Deemed average number of functional groups = (average hydroxyl value of polycarbonate polyol (B) (mgKOH/g) × number average molecular weight calculated from PPG calibration curve through GPC measurement of polycarbonate polyol (B) (g/mol))/(56.11 (KOHg/mol) × 1000)

The average hydroxyl value of the polycarbonate polyol (B) is preferably 40 to 500 mgKOH/g, more preferably 50 to 450 mgKOH/g, and still more preferably 50 to 300 mgKOH/g. If the average hydroxyl value is 40 mgKOH/g or more, the urethane group concentration in a polyurethane resin does not become too low, and the strength at break in a tensile test is further improved. If the average hydroxyl value is 500 mgKOH/g or less, the urethane group concentration does not become too high, and the elongation at break in a tensile test is further improved.

The average hydroxyl value is a hydroxyl value measured through a method using an acetylation reagent in compliance with JIS K1557-1. The details of the measurement method are as described in the examples described below.

The number average molecular weight of the polycarbonate polyol (B) is preferably 400 to 4,000 g/mol and more preferably 500 to 3,000 g/mol. If the number average molecular weight is 400 or more, the urethane group concentration in a polyurethane does not become too high, and the 100% modulus tends to be further improved. If the number average molecular weight is 4,000 mgKOH/g or less, the urethane group concentration in a polyurethane resin does not become too low, and the strength at break in a tensile test is further improved. The details of the method for measuring a number average molecular weight obtained through gel permeation chromatography (GPC) measurement are as described in the examples described below.

(Content of polycarbonate polyol (B))

The content of the polycarbonate polyol (B) based on the content of the polyol (A) in the polyurethane resin composition (or a total content of a mass of the polyol (B') and a mass of the polycarbonate polyol (B)) may be 5.0 mass% or more, 7.0 mass% or more, 10.0 mass% or more, 15.0 mass% or more, or 20.0 mass% or more, and 100 mass% or less, 95 mass% or less, 90 mass% or less, 85 mass% or less, or 80 mass% or less because in this case a cured product having a higher softening temperature can be formed. The content of the polycarbonate polyol (B) based on the content of the polyol (A) in the polyurethane resin composition (or a total content of a mass of the polyol (B') and a mass of the polycarbonate polyol (B)) is preferably 5.0 to 100 mass%, 8.0 to 95 mass%, or 10 to 90 mass%, more preferably 15 to 80 mass%, and still more preferably 20 to 70 mass%. If the content of the polycarbonate polyol (B) is within the above-described ranges, in a case where the polyurethane resin composition is used in a polyurethane film, a polyurethane film having even better 100% modulus and heat resistance together is likely to be obtained. In addition, if the content of the polycarbonate polyol (B) is 100 mass% or less, a polyurethane dispersion having superior handleability is likely to be obtained. Furthermore, if the content of the polycarbonate polyol (B) is 100 mass% or less, a polyurethane film having superior 100% modulus is likely to be obtained.

<Polyol (B')>

Examples of polyols (B') different from polycarbonate polyols (B) include polyester polyols, polyether polyols, polycarbonate polyols (where the compounds corresponding to the polycarbonate polyol (B) are excluded), polyolefin polyols, and any combination of two or more thereof.

As polyester polyols, polyester polyols obtained from glycol and dicarboxylic acids and polyols obtained by subjecting cyclic ester compounds such as lactones to ring-opening addition polymerization using glycol as an initiator are preferable.

Examples of glycols include: low-molecular-weight polyols such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, dimer acid diols, ethylene oxide or propylene oxide adducts of bisphenol A, bis(β-hydroxyethyl) benzene, xylylene glycol, glycerol, trimethylolpropane, and pentaerythritol; and any combination of two of these.

Examples of dicarboxylic acids include polybasic acids such as oxalic acid, malonic acid, maleic acid, adipic acid, tartaric acid, pimelic acid, sebacic acid, phthalic acid, and terephthalic acid, and any combination of two or more thereof.

Examples of cyclic ester compounds such as lactones include β-propiolactone, β-butyrolactone, γ-butyrolactone, β-valerolactone, γ-valerolactone, δ-valerolactone, α-caprolactone, β-caprolactone, γ-caprolactone, δ-caprolactone, ε-caprolactone, α-methyl-ε-caprolactone, β-methyl-ε-caprolactone, 4-methylcaprolactone, γ-caprylolactone, ε-caprylolactone, and ε-palmitolactone, and any combination of two or more thereof.

Examples of polyether polyols include polyethylene glycol, a polypropylene ether polyol, and polytetramethylene ether polyol, and any combination of two or more thereof.

Examples of polycarbonate polyols include those obtained by reacting carbonates with glycols. Carbonates and glycols may be the same compounds as those exemplified above.

Examples of polyolefin polyols include hydroxyl group-terminated polybutadiene or hydrogenated products thereof, hydroxyl group-containing chlorinated polyolefins, and any combination of two or more thereof.

The polyols (B') may be one type selected from the above-described polyols or may be a combination of two or more types thereof.

Considering various properties such as durability and adhesiveness of a coating obtained from the polyurethane resin composition, the polyols (B') preferably include polycarbonate polyols and more preferably polycarbonate diols.

The number average molecular weight of a polyol (B') is preferably 300 to 10,000, and may be 500 to 7,000, 800 to 5,000, or 1,000 to 3,000. The details of a method for measuring the number average molecular weight may be as described in the examples described below.

The polyol (B') may contain a diol (a-1). Examples of diols (a-1) include the same ones as the glycols exemplified in the description of the polyester polyols. Diols (a-1) preferably contain at least one selected from the group consisting of ethylene glycol, 1,3-propanediol, 1,4-butanediol, 1,5-pentanediol, 1,6-hexanediol, 1,8-octanediol, 1,9-nonanediol, and 2-methyl-1,8-octanediol.

The molar ratio of the polyol (B') to the diol (a-1)[polyol (B')/diol (a-1)] is preferably 10/0 to 1/20 and more preferably 10/0 to 1/10. By setting it within these ranges, a polyurethane resin composition having an even lower 100% modulus and an even higher softening temperature can be obtained.

(Average hydroxyl value of polyol (A))

The average hydroxyl value of the polyol (A) is preferably 30 to 150 mgKOH, 50 to 130 mgKOH, and still more preferably 60 to 120 mgKOH. If the average hydroxyl value is within the above-described ranges, in a case where the polyurethane resin composition is used in a polyurethane film, there is a tendency that a polyurethane film having even better 100% modulus and heat resistance together is likely to be obtained. In addition, if the average hydroxyl value is 150 mgKOH or less, a polyurethane film having a superior 100% modulus is likely to be obtained. The average hydroxyl value of the polyol (A) is calculated from hydroxyl values of components contained in the polyol (A). The details of a specific method for calculating the average hydroxyl value of the polyol (A) are as described in the examples below.

(Cross-linking density)

The cross-linking density for the isocyanate group-terminated urethane prepolymer (E) and the chain extender (G) is preferably 0.02 to 0.47, more preferably 0.03 to 0.40, and still more preferably 0.05 to 0.35. If the cross-linking density is within the above-described ranges, in a case where the polyurethane resin composition is used in a polyurethane film, there is a tendency that a polyurethane film having even better 100% modulus and heat resistance together is likely to be obtained. In addition, if the cross-linking density is 0.47 or less, a polyurethane film having a superior 100% modulus is likely to be obtained.

<Organic acid (C)>

The organic acid (C) is, for example, a hydrophilic group-containing monomer which can impart hydrophilicity to the isocyanate group-terminated prepolymer (E) obtained through a reaction with a polyisocyanate (D) and can make a finally obtained resin composition aqueous.

Examples of organic acids (C) include those having one or more active hydrogen groups. Examples of organic acids include carboxylic acids, sulfonic acids, phosphoric acid, phosphonic acid, phosphinic acid, thiosulfonic acid, and any combination of two or more thereof. These groups may be introduced independently or may be associated with each other like a chelate. Among these, a dimethylol fatty acid having a carboxy group (-COOH) is more preferably.

The dimethylol fatty acid may be, for example, a compound represented by Formula (c) below.

[Chem. 1]

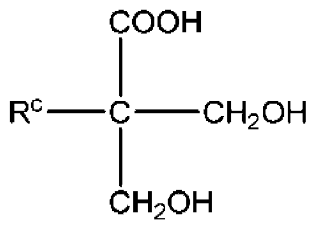

(c)

In Formula (c), $R^c$ represents an aliphatic hydrocarbon group. The number of carbon atoms in the aliphatic hydrocarbon group represented by $R^c$ may be, for example, 1 or more, and 10 or less, 6 or less, or 3 or less. The aliphatic hydrocarbon group represented by $R^c$ may be linear or branched. The aliphatic hydrocarbon group represented by $R^c$ may be, for example, $-CH_3$, $-CH_2CH_3$, $-CH_2CH_2CH_3$, or $CH_2CH_2CH_2CH_2CH_2CH_2CH_3$.

Examples of dimethylol fatty acids include dimethylolalkanoic acids such as dimethylolpropionic acid (such as 2,2-dimethylolpropanoic acid), dimethylolbutanoic acid, dimethylolpentanoic acid, and dimethylolnonanoic acid, and any combination of two or more thereof.

The content of an organic acid (C) based on the sum of the mass of the isocyanate group-terminated urethane prepolymer (E) and the mass of the chain extender (G) in the polyurethane resin composition may be 0.01 mmol/g or more, 0.10 mmol/g or more, or may be 0.80 mmol/g or less or 0.50 mmol/g or less.

<Polyisocyanate (D)>

A polyisocyanate (D) is a compound having two or more isocyanate groups (-N=C=O). The number of isocyanate groups in the polyisocyanate (D) may be, for example, 6 or less, 4 or less, or 3 or less. The number of isocyanate groups in the polyisocyanate (D) may be, for example, 2 to 3, or may be 2. The polyisocyanate (D) may be a compound having a plurality of isocyanate groups and hydrocarbon groups connecting the plurality of isocyanate groups.

The polyisocyanate (D) is not particularly limited, and examples thereof include various polyisocyanates well-known in the related art. Examples of aliphatic isocyanates such as hexamethylene diisocyanate, 1,4-tetramethylene diisocyanate, 2-methylpentane-1,5-diisocyanate, and lysine diisocyanate; alicyclic diisocyanates such as isophorone diisocyanate, norbornane diisocyanate, hydrogenated tolylene diisocyanate, hydrogenated xylene diisocyanate, hydrogenated diphenylmethane diisocyanate, and hydrogenated tetramethylxylene diisocyanate; aromatic isocyanates such as 2,4-tolylene diisocyanate, 2,6-tolylene diisocyanate, a 4,4'-diphenylmethane diisocyanate, 2,4'-diphenylmethane diisocyanate, 2,2'-diphenylmethane diisocyanate, 4,4'-diphenyl ether diisocyanate, 2-nitrodiphenyl-4,4'-diisocyanate, 2,2'-diphenylpropane-4,4'-diisocyanate, 3,3'-dimethyldiphenylmethane-4,4'-diisocyanate, 4,4'-diphenylpropane diisocyanate, m-phenylene diisocyanate, p-phenylene diisocyanate, naphthylene-1,4-diisocyanate, naphthylene-1,5-diisocyanate, and 3,3'-dimethoxydiphenyl-4,4'-diisocyanate; aromatic-aliphatic diisocyanates such as xylylene-1,4-diisocyanate and xylylene-1,3-diisocyanate; allophanate-modified polyisocyanates obtained through a reaction of these organic polyisocyanates and alcohols; and any combination of two or more thereof.

The polyisocyanate (D) is preferably an aliphatic diisocyanate or an alicyclic diisocyanate, more preferably an aliphatic diisocyanate, and still more preferably an isophorone diisocyanate.

The ratio (hydroxyl group/isocyanate group) of the total number of moles of hydroxyl groups in the polyol (A) to the total number of moles of isocyanate groups in the polyisocyanate (D) may be, for example, 0.200 or more, 0.300 or more, or 0.400 or more, and may be 0.950 or less, 0.900 or less, or 0.800 or less.

<One embodiment of isocyanate group-terminated prepolymer (E)>

One embodiment of the isocyanate group-terminated prepolymer (E) may be, for example, a polycarbonate polyol (B) which contains a reaction product of a polyol (B'), a polyol different from the polyol (B'), an organic acid (C), and a polyisocyanate (D), and in which the polyol different from the polyol (B') has an average number of hydroxyl functional groups exceeding 2.

<Method for producing isocyanate group-terminated prepolymer (E)>

The isocyanate group-terminated prepolymer (E) can be, for example, produced through a method including reacting a polyisocyanate (D), a polyol (A), and an organic acid (C) in a diluting solvent as necessary under the conditions where the number of moles of isocyanate groups is in excess of that of hydroxyl groups. At this time, a well-known urethanization catalyst may be used. The reaction temperature is preferably 0°C to 100°C, particularly preferably 20°C to

90°C.

[Neutralizer (F)]

A neutralizer (F) is preferably a basic neutralizer. Examples of neutralizers (F) include: organic amines such as ammonia, ethylamine, trimethylamine, triethylamine, triisopropylamine, tributylamine, triethanolamine, N-methyldiethanolamine, N-phenyldiethanolamine, monoethanolamine, dimethylethanolamine, diethylethanolamine, morpholine, N-methylmorpholine, 2-amino-2-ethyl-1-propanol, and higher alkyl-modified morpholine; alkali metals such as lithium, potassium, and sodium; inorganic alkalis such as sodium hydroxide and potassium hydroxide; and any combination of two or more thereof. In addition, from the viewpoint of improving durability or smoothness of a coating film, a highly volatile neutralizer, such as ammonia, trimethylamine, and triethylamine, dissociated through heating is preferable.

The neutralizer may be a trialkylamine. Examples of trialkylamines include trimethylamine, triethylamine, triisopropylamine, and tributylamine.

In addition, to further improve water dispersion stability of the polyurethane resin composition, the neutralizer (F) may further contain an anionic polar group compound and a cationic polar group-containing compound.

Examples of anionic polar group-containing compounds include a compound consisting of a neutralizer and an organic acid having one or more active hydrogen groups. Examples of organic acids include carboxylates, sulfonates, phosphates, phosphonates, phosphinates, thiosulfonates, and any combination of two or more thereof. These groups may be introduced independently or may be associated with each other like a chelate.

Examples of cationic polar group-containing compounds include a compound consisting of: a primary or secondary amine having one or more active hydrogen groups; and one or more selected from any of inorganic acid organic acid neutralizers and a quaternizing agent.

Examples of primary or secondary amines having one or more active hydrogen groups include: N,N-dimethylethanolamine, N,N-diethanolamine, N,N-dipropylethanolamine, N,N-diphenylethanolamine, N-methyl-N-ethylethanolamine, N-methyl-N-phenylethanolamine, N,N-dimethylpropanolamine, N-methyl-N-ethylpropanolamine, N-methyldiethanolamine, N-ethyldiethanolamine, N-methyldipropanolamine, N-phenyldiethanolamine, N-phenyldipropanolamine, N-hydroxyethyl-N-hydroxypropyl-methylamine, N,N'-dihydroxyethylpiperazine, triethanolamine, trisisopropanolamine, N-methyl-bis-(3-aminopropyl)-amine, and N-methyl-bis-(2-aminopropyl)-amine; those obtained by adding alkylene oxides to primary amines such as ammonia and methylamine and secondary amines such as dimethylamine; and any combination of two or more thereof.

Examples of inorganic acids and organic acid include hydrochloric acid, acetic acid, lactic acid, cyanoacetic acid, phosphoric acid, sulfuric acid, and any combination of two or more thereof.

Examples of quaternizing agents include dimethyl sulfate, benzyl chloride, bromoacetamide, chloroacetamide, alkyl halides such as ethyl bromide, propyl bromide, and butyl bromide, and any combination of two or more thereof.

Examples of other cationic polar group-containing compounds include cationic compounds such as primary amine salts, secondary amine salts, tertiary amine salts, and pyridinium salts.

The content of a neutralizer based on the sum of the mass of the isocyanate group-terminated urethane prepolymer (E) and the mass of the chain extender (G) in the polyurethane resin composition may be 0.01 mmol/g or more, 0.10 mmol/g or more, or may be 0.80 mmol/g or less or 0.50 mmol/g or less.

(Organic solvent)

When synthesizing the isocyanate group-terminated prepolymer (E), it may be diluted to an arbitrary solid content with an organic solvent that is inert to isocyanate groups. Examples of such an organic solvent include aromatic solvents such as toluene, xylene, Swasol (aromatic hydrocarbon solvent manufactured by Maruzen Petrochemical), Solvesso (aromatic hydrocarbon solvent manufactured by Exxon Mobil Corporation); aliphatic hydrocarbon-based solvents such as hexane; alicyclic hydrocarbon-based solvents such as cyclohexane and isophorone; ketone-based solvents such as acetone, methyl ethyl ketone, methyl isobutyl ketone, and cyclohexanone; ester-based solvents such as ethyl acetate, butyl acetate, and isobutyl acetate; glycol ether ester-based solvents such as ethylene glycol monoethyl ether acetate, propylene glycol monoethyl ether acetate, propylene glycol-3-methyl-3-methoxybutyl acetate, and ethylene glycol ethyl-3-ethoxypropionate; glycol ether-based solvents such as ethylene glycol dimethyl ether, diethylene glycol dibutyl ether, propylene glycol dibutyl ether, and dipropylene glycol dimethyl ether; ether-based solvents such as tetrahydrofuran and dioxane; and any combination of two or more thereof.

The organic solvent is preferably an ester-based solvent such as ethyl acetate, butyl acetate, or isobutyl acetate which can be easily removed during desolvation and whose temperature can be raised to 50°C to 100°C during the formation of the isocyanate group-terminated urethane prepolymer (E), and particularly preferably ketone-based solvents such as acetone, methyl ethyl ketone and methyl isobutyl ketone.

[Chain extender (G)]

A chain extender is a compound reacting with the isocyanate group-terminated urethane prepolymer (E) to form a polyurethane resin. Examples of chain extenders include water ($H_2O$) or a compound having a functional group, such as a primary amino group ($-NH_2$), a secondary amino group (-NH-), or a hydroxy group (-OH), that can react with an isocyanate group.

The chain extender (G) is preferably one or more selected from the group consisting of water and an amine compound having one or more primary amino groups or secondary amino group.

The amine compound as the chain extender (G) may be an amine compound having two or more amino groups selected from the group consisting of a primary amino group and a secondary amino group, or may be a compound having one or more hydroxyl groups (-OH) and one amino group selected from the group consisting of a primary amino group and a secondary amino group.

The amine compound is more preferably at least one selected from the group consisting of an aliphatic diamine and an alicyclic diamine. The amine compound may be, for example, a compound represented by Formula (g1): $H_2N-R^g-NH_2$. In Formula (g1), $R^g$ represents an aliphatic hydrocarbon group or an alicyclic hydrocarbon group.

Examples of the amine compound include ethylenediamine, hexamethylenediamine, xylylenediamine, isophoronediamine, diethylenetriamine, N-aminoethyl-N-ethanolamine, monoethanolamine, and any combination of two or more thereof.

A curing catalyst (polymerization catalyst) may be used as necessary during a chain extension reaction. Examples of curing catalysts include usual curing catalysts such as: metal-based catalysts such as dioctyltin dilaurate, zinc naphthenate, and a bismuth compound; and amine-based catalysts such as triethylenediamine and N-methylmorpholine. By using a curing catalyst, the reaction rate can be further increased and the reaction temperature can be further lowered.

The equivalent ratio (active hydrogen group/isocyanate group) of an active hydrogen group (an amino group and a hydroxyl group) in the amine compound to an isocyanate group in the isocyanate group-terminated prepolymer (E) is, for example, preferably 0 to 1.3, more preferably 0.05 to 1.1, and still more preferably 0.10 to 0.9. When this ratio is within the above-described ranges, a polyurethane resin having excellent 100% modulus and heat resistance is likely to be formed.

<Method for producing polyurethane resin composition>

A polyurethane resin composition can be produced through, for example, a method including: a step of neutralizing an isocyanate group-terminated prepolymer (E) with a neutralizer (F) to obtain a neutralized product of the isocyanate group-terminated prepolymer (E); and a step of emulsifying the neutralized product of the isocyanate group-terminated prepolymer (E) with water and reacting with a chain extender (G) to obtain the polyurethane resin composition.

Examples of the method for performing a chain extension reaction using the isocyanate group-terminated prepolymer (E) and the chain extender (G) include: a method for dissolving the chain extender (G) in water in advance and adding the isocyanate group-terminated prepolymer (E) to an aqueous solution of the chain extender (G) to perform emulsification and a chain extension reaction; and a method for emulsifying the isocyanate group-terminated prepolymer (E) in water, followed by adding an aqueous solution of the chain extender (G) thereto to perform a chain extension reaction.

(Total content of urea groups)

The lower limit of the total content of urea groups with respect to the sum of the mass of the isocyanate group-terminated urethane prepolymer (E) and the mass of the chain extender (G) in the polyurethane resin composition is 0.01 mmol/g or more, and may be, for example, 0.02 mmol/g or more, 0.05 mmol/g or more, 0.10 mmol/g or more, 0.13 mmol/g or more, or 0.15 mmol/g or more. The upper limit of the total content of urea groups with respect to the sum of the mass of the isocyanate group-terminated urethane prepolymer (E) and the mass of the chain extender (G) in the polyurethane resin composition is 0.80 mmol/g or less, and may be, for example, 0.70 mmol/g or less, 0.60 mmol/g or less, 0.55 mmol/g or less, 0.50 mmol/g or less, or 0.45 mmol/g or less. The total content of urea groups with respect to the sum of the mass of the isocyanate group-terminated urethane prepolymer (E) and the mass of the chain extender (G) is 0.01 to 0.80 mmol/g, and may be, for example, 0.05 mmol/g to 0.75 mmol/g, 0.07 mmol/g to 0.70 mmol/g, 0.13 mmol/g to 0.60 mmol/g, or 0.15 mmol/g to 0.55 mmol/g. If the total content of urea groups is within the above-described ranges, in a case where the polyurethane resin composition is used in a polyurethane film, a polyurethane film having even better 100% modulus and heat resistance together is likely to be obtained. In addition, if the total content of urea groups is 0.80 mmol/g or less, a polyurethane film having a superior 100% modulus is likely to be obtained.

In a case where the chain extender (G) does not contain substances other than water and an amine compound

having one or more primary or secondary amino groups (that is, in a case where the chain extender contains only water and the amine compound having one or more primary or secondary amino groups), the total content of urea groups corresponds to the sum of the content of urea groups derived from the amine compound and the content of urea groups derived from water.

(Content of urea groups derived from amine compound)

The chain extender (G) may contain an amine compound having one or more primary or secondary amino groups. At this time, the content of urea groups derived from the amine compound in the polyurethane resin composition with respect to the sum of the mass of the isocyanate group-terminated urethane prepolymer (E) and the mass of the chain extender (G) may be, for example, 0.01 mmol/g or more, 0.02 mmol/g or more, 0.03 mmol/g or more, 0.05 mmol/g or more, 0.10 mmol/g or more, 0.13 mmol/g or more, or 0.15 mmol/g or more. The upper limit of the content of the urea groups derived from the amine compound with respect to the sum of the mass of the isocyanate group-terminated urethane prepolymer (E) and the mass of the chain extender (G) may be, for example, 0.48 mmol/g or less, 0.45 mmol/g or less, 0.40 mmol/g or less, 0.34 mmol/g or less, 0.30 mmol/g or less, 0.25 mmol/g or less, or 0.23 mmol/g or less. The content of the urea groups derived from the amine compound with respect to the sum of the mass of the isocyanate group-terminated urethane prepolymer (E) and the mass of the chain extender (G) may be, for example, 0 mmol/g to 0.480 mmol/g, 0.01 mmol/g to 0.400 mmol/g, 0.05 mmol/g to 0.340 mmol/g, or 0.130 mmol/g to 0.300 mmol/g. If the concentration of the urea groups derived from the amine compound is within the above-described ranges, in a case where the polyurethane resin composition is used in a polyurethane film, a polyurethane film having even better 100% modulus and heat resistance together is likely to be obtained. In addition, if the concentration of the urea groups derived from the amine compound is 0.480 mmol/g or less, a polyurethane film having a superior 100% modulus is likely to be obtained.

(Content of urea groups derived from water)

The chain extender (G) may contain water.

The lower limit of the content of urea groups derived from water with respect to the sum of the mass of the isocyanate group-terminated urethane prepolymer (E) and the mass of the chain extender (G) in the polyurethane resin composition may be, for example, 0.01 mmol/g or more, 0.02 mmol/g or more, 0.03 mmol/g or more, 0.05 mmol/g or more, 0.10 mmol/g or more, 0.13 mmol/g or more, or 0.15 mmol/g or more. The upper limit of the content of the urea groups derived from water with respect to the sum of the mass of the isocyanate group-terminated urethane prepolymer (E) and the mass of the chain extender (G) in the polyurethane resin composition is 0.80 mmol/g or less, and may be, for example, 0.70 mmol/g or less, 0.60 mmol/g or less, 0.50 mmol/g or less, 0.40 mmol/g or less, 0.30 mmol/g or less, or 0.25 mmol/g or less. The content of the urea groups derived from water with respect to the sum of the mass of the isocyanate group-terminated urethane prepolymer (E) and the mass of the chain extender (G) may be, for example, 0.01 mmol/g to 0.80 mmol/g, 0.05 mmol/g to 0.70 mmol/g, or 0.10 mmol/g to 0.60 mmol/g, or 0.15 mmol/g to 0.50 mmol/g. If the concentration of the urea groups derived from water is within the above-described ranges, in a case where the polyurethane resin composition is used in a polyurethane film, a polyurethane film having even better 100% modulus and heat resistance together is likely to be obtained. In addition, if the concentration of the urea groups derived from water is 0.80 mmol/g or less, a polyurethane film having a superior 100% modulus is likely to be obtained.

(Content of urea groups derived from amine compound with respect to total content of urea groups)

The lower limit of the content of urea groups derived from the amine compound (the proportion of amine compound-derived urea groups) with respect to the total content of urea groups may be, for example, 0 mol% or more, 5 mol% or more, 10 mol% or more, 15 mol% or more, 20 mol% or more, 25 mol% or more, or 30 mol% or more. The upper limit of the content of the urea groups derived from the amine compound with respect to the total content of urea groups may be, for example, 95 mol% or less, 90 mol% or less, 85 mol% or less, 80 mol% or less, 75 mol% or less, 70 mol% or less, or 65 mol% or less. The content of the urea groups derived from the amine compound with respect to the total content of urea groups may be, for example, 0 to 95 mol%, 5 to 90 mol%, 10 to 85 mol%, 15 to 80 mol%, or 20 to 70 mol%. If the content of the urea groups derived from the amine compound with respect to the total content of urea groups is within the above-described ranges, in a case where the polyurethane resin composition is used in a polyurethane film, a polyurethane film having even better 100% modulus and heat resistance together is likely to be obtained. In addition, if the concentration of the urea groups derived from the amine compound is 100 mol% or less, a polyurethane film having a superior softening temperature is likely to be obtained.

<Curing agent (X)>

The polyurethane resin composition may further contain a curing agent (X).

The curing agent (X) cures a reaction product of the isocyanate group-terminated urethane prepolymer (E) and the chain extender (G) to form a polyurethane resin. In a case where the polyurethane resin composition contains the curing agent (X), the curing agent (X) constitutes one component of a two-pack system. In a case where the polyurethane resin composition does not contain the curing agent (X), the polyurethane resin composition is suitable as a one-pack system.

Specific examples of the curing agent (X) include urethane-modified products, urea-modified products, allophanate-modified products, biuret-modified products, uretdione-modified products, isocyanurate-modified products, and the like of organic diisocyanates. Among these, trimers or adducts of hexamethylene diisocyanate (HDI) or isophorone diisocyanate (IPDI) are preferable.

<Other components>

To further enhance physical properties and add various physical properties, the polyurethane resin composition may contain various additives. Examples of various additives include a film-forming agent, a viscosity modifier, an anti-gelling agent, a retardant, a plasticizer, an antioxidant, an ultraviolet absorber, an antibacterial agent, a filler, an internal mold release agent, a reinforcing material, a matting agent, a conductivity-imparting agent, a charge control agent, an antistatic agent, a lubricant, a dye, a pigment, and other processing aids.

The polyurethane resin composition may be an emulsion obtained by neutralizing a reaction product of the isocyanate group-terminated urethane prepolymer (E) and the chain extender (G) using the neutralizer (F).

The polyurethane resin composition obtained in this manner is preferably used as an aqueous polyurethane resin emulsion. By curing this aqueous polyurethane resin emulsion, a tough molded body such as a film or a coating film having a high softening temperature and a reduced 100% modulus (favorable texture) can be obtained, and the emulsion can be suitably used as a surface treatment agent for leather or for leather applications such as artificial leather and synthetic leather. The 100% modulus is one of indicators for quantitatively determining the moist and high-grade feeling when touching synthetic leather, and the lower the numerical value, the better the above-described properties are for the polyurethane resin.

In addition, the polyurethane resin composition may be a one-pack type or a two-pack type, and is preferably a one-pack type.

[Cured product]

One embodiment of a cured product is a cured product of a polyurethane resin composition containing a reaction product of an isocyanate group-terminated urethane prepolymer (E) and a chain extender (G).

The isocyanate group-terminated urethane prepolymer (E) contains a reaction product of a polyol (A) containing a polycarbonate polyol (B) having an average number of hydroxyl functional groups exceeding 2, an organic acid (C), and a polyisocyanate (D), in which a total content of urea groups in the polyurethane resin composition is 0.01 to 0.80 mmol/g with respect to a sum of a mass of the isocyanate group-terminated urethane prepolymer (E) and a mass of the chain extender (G), and the polycarbonate polyol (B) has a deemed average number of functional groups of 2.0 to 3.90.

The cured product according to one embodiment is obtained by curing the above-described polyurethane resin composition and is obtained by, for example, removing a part or all of the neutralizer (F) and a part or all of water from the composition.

[Artificial leather or synthetic leather]

One embodiment of artificial leather or synthetic leather contains a cured product of a polyurethane resin composition and a substrate. Artificial leather or synthetic leather according to one embodiment can be produced through, for example, a method including forming a cured product of a polyurethane resin composition on a substrate. In addition, artificial leather or synthetic leather according to one embodiment can be produced through a method including impregnating a substrate with a polyurethane resin composition to cure the polyurethane resin composition. In artificial leather, a substrate may be, for example, a base fabric such as a knitted fabric or a woven fabric. In synthetic leather, a substrate may be a non-woven fabric.

[Surface treatment agent for leather]

A surface treatment agent for leather is an agent used for treating the surface of leather or its material. Leather to

which the surface treatment agent for leather is applied may be, for example, synthetic leather, artificial leather, or natural leather.

**Examples**

Hereinafter, examples of the present invention will be described. However, the present invention is not limited by these examples. The notation of % and parts in the examples is on a mass basis unless otherwise specified.

<Method for calculating each composition>

(Deemed average number of functional groups)

The deemed average number of functional groups of the polycarbonate polyol (B) was calculated from a hydroxyl value and the number average molecular weight obtained through gel permeation chromatography (GPC) measurement. Originally, the average functional group number is calculated from a true number average molecular weight and an average hydroxyl value. However, since it is difficult to calculate the true number average molecular weight of the polycarbonate polyol (B), the number average molecular weight converted from a PPG calibration curve through GPC measurement was used and defined as a deemed average number of functional groups. The deemed average number of functional groups is defined by the following equation.

Deemed average number of functional groups = (average hydroxyl value of polycarbonate polyol (B) (mgKOH/g) $\times$ number average molecular weight calculated from PPG calibration curve through GPC measurement of polycarbonate polyol (B) (g/mol))/(56.11 (KOHg/mol) $\times$ 1000)

(Total content of urea groups)

Urea groups in a polyurethane resin composition is formed through a reaction between an isocyanate group in an isocyanate group-terminated prepolymer (E) and an amine compound and/or water contained as a chain extender (G). It is known that the reaction rate between the isocyanate group and the chain extender (G) is much higher than the reaction rate between the isocyanate group and a hydroxy group of a polyol component. Accordingly, the total content of the urea groups corresponds to the content of an unreacted isocyanate group of the isocyanate group-terminated prepolymer (E). As described above, the total content of the urea groups with respect to the sum of the mass of the isocyanate group-terminated urethane prepolymer (E) and the mass of the chain extender (G) is defined by the following equation.

Total content of urea groups (mmol/g) = content of urea groups derived from water (mmol/g) + content of urea groups derived from amine compound (mmol/g)

Since water is used as a solvent in one aspect of the present disclosure, urea groups derived from the amine compound and urea groups derived from water are produced at the same time. The urea groups derived from the amine compound have a much higher reaction rate than the urea groups derived from water, and it can be stated that all amines derived from the amine compound are present as urea groups.

The total content of the above-described urea groups with respect to the sum of the mass of the isocyanate group-terminated urethane prepolymer (E) and the mass of the chain extender (G) can also be said to be the content of urea groups derived from the chain extender (G).

(Content of urea groups derived from amine compound)

The content of urea groups derived from the amine compound was determined from the amount of amine calculated from the amount of the amine compound added. Accordingly, the content of the urea groups derived from the amine compound with respect to the sum of the mass of the isocyanate group-terminated urethane prepolymer (E) and the mass of the chain extender (G) is defined by the following equation.

Content of urea groups derived from amine compound (mmol/g) = amount of amine compound added (g)/molecular weight of amine compound (g/mol) $\times$ number of amino groups per molecule/(amount of polyol (B') added (g) + amount of polycarbonate polyol (B) added (g) + amount of organic acid (dimethylol fatty acid) (C) added (g) + amount of polyisocyanate (D) added (g) + amount of chain extender (G) added (g)) $\times$ 1000

Urea groups derived from water are produced through a multi-stage reaction. First, water reacts with an isocyanate of the isocyanate group-terminated prepolymer (E) to form carbamic acid, which then undergoes decarbonization to become a primary amine. Next, the produced primary amine reacts with an isocyanate of another isocyanate group-terminated prepolymer (E) to form a urea group. Accordingly, the urea group due to water is produced by consuming two isocyanates.

(Content of urea groups derived from water)

The content of the urea groups derived from water with respect to the sum of the mass of the isocyanate group-terminated urethane prepolymer (E) and the mass of the chain extender (G) is defined by the following equation.

Content of urea groups derived from water (mmol/g) =[content of unreacted isocyanate group of isocyanate group-terminated prepolymer (E) (mmol/g) × (amount of polyol (B') added (g) + amount of polycarbonate polyol (B) added (g) + amount of organic acid (dimethylol fatty acid) (C) added (g) + amount of polyisocyanate (D) added (g) + amount of organic solvent added (g) before isocyanate group measurement)/(amount of polyol (B') added (g) + amount of polycarbonate polyol (B) added (g) + amount of organic acid (dimethylol fatty acid) (C) added (g) + amount of polyisocyanate (D) added (g) + amount of chain extender (G) added (g)) - concentration of urea groups derived from amine compound (mmol/g)]/2

The amount of organic solvent added before isocyanate group measurement is the mass of organic solvent contained in the isocyanate group-terminated prepolymer (E) when measuring the amount of isocyanate group.

(Content of urea groups derived from amine compound with respect to total content of urea groups)

The content of urea groups derived from the amine compound (the proportion of amine compound-derived urea groups) with respect to the total content of urea groups was calculated by dividing the content of the urea groups derived from the amine compound by the total content of the urea groups. Accordingly, the content of the urea groups derived from the amine compound with respect to the total content of the urea groups was defined by the following equation.

Content of urea groups derived from amine compound (mmol/g) with respect to total content of urea groups = content of urea groups derived from amine compound (mmol/g)/total content of urea groups (mmol/g) × 100

The total content of urea groups, the content of urea groups derived from the amine compound, the content of urea groups derived from water, and the content of the urea groups derived from the amine compound (the proportion of amine compound-derived urea groups) with respect to the total content of the urea groups can also be calculated using $^1$H-NMR measurement.

(Average hydroxyl value)

The average hydroxyl value was calculated from hydroxyl values when a polyol (B') is mixed with a polycarbonate polyol (B). Accordingly, the average hydroxyl value is defined by the following equation.

Average hydroxyl value (mgKOH/g) = (average hydroxyl value of polyol (B') (mgKOH/g) × amount of polyol (B') added (g) + average hydroxyl value of polycarbonate polyol (B) (mgKOH/g) × amount of polycarbonate polyol (B) added (g))/(amount of polyol (B') (g) + amount of polycarbonate polyol (B) added (g))

(Cross-linking density)

The cross-linking density for the isocyanate group-terminated urethane prepolymer (E) and the chain extender (G) was calculated from the amount of cross-links derived from a tri- or higher functional polyhydric alcohol of the polycarbonate polyol (B) or the polyol (B'). Accordingly, the cross-linking density is defined by the following equation. In a case where there are other components that form cross-links, the calculation can be made in the same way by replacing the molecules "polycarbonate polyol (B)" and the "polyhydric alcohol" in the equation with the other components.

((In case of polycarbonate polyol (B)))

Cross-linking density (mmol/g) = amount of polycarbonate polyol (B) added (g) × average hydroxyl value of polycarbonate polyol (B) (mgKOH/g) / 56.11 / 1000 / number of functional groups in polycarbonate polyol (B) × (number of functional groups in polycarbonate polyol (B) - 2)/(amount of polyol (B') added (g) + amount of polycarbonate polyol (B) added (g) + amount of organic acid (dimethylol fatty acid) (C) added (g) + amount of polyisocyanate (D) added (g) + amount of chain extender (G) added (g)) × 1000

((In case of polyhydric alcohol))

Cross-linking density (mmol/g) = amount of polyhydric alcohol added (g) / molecular weight of polyhydric alcohol (g/mol) × (number of functional groups in polyhydric alcohol - 2)/(amount of polyol (B') added (g) + amount of polycarbonate polyol (B) added (g) + amount of organic acid (dimethylol fatty acid) (C) added (g) + amount of polyisocyanate (D) added (g) + amount of chain extender (G) added (g)) × 1000

(Content of polycarbonate polyol (B))

The content of polycarbonate polyol (B) in the polyurethane resin composition was calculated from a mass proportion when the polyol (B') is mixed with the polycarbonate polyol (B). Accordingly, the content of polycarbonate polyol (B) is defined by the following equation.

Content of polycarbonate polyol (B) (mass%) = amount of polycarbonate polyol (B) added (g)/(amount of polyol (B') added (g) + amount of polycarbonate polyol (B) added (g)) × 100

(Analysis evaluation)

[Content of unreacted isocyanate group of isocyanate group-terminated prepolymer (E)]

The content of an unreacted isocyanate group of the isocyanate group-terminated prepolymer (E) was measured based on JIS-K6806.

[Measurement of number average molecular weight]

The obtained composition was analyzed through GPC under the following conditions to measure the number average molecular weight of the composition. The result is shown in Table 1.

-Conditions-

(1) Measuring device: HLC-8420 (manufactured by Tosoh Corporation)
(2) Column: TSKgel (manufactured by Tosoh Corporation)

- G3000H-XL
- G3000H-XL
- G2000H-XL
- G2000H-XL

(3) Mobile phase: THF (tetrahydrofuran)
(4) Detector: Refractive index (RI) detector (HLC-8420 accessory)
(5) Temperature: 40°C
(6) Flow rate: 1.000 mL/min
(7) Calibration curve: A calibration curve was obtained using the following products (all are bifunctional polyoxypropylene polyols manufactured by Sanyo Chemical Industries, Ltd.).

· "Sannix PP-200" (number average molecular weight = 200, average functional group number: 2)
· "Sannix PP-400" (number average molecular weight = 400, average functional group number: 2)
· "Sannix PP-1000" (number average molecular weight = 1000, average functional group number: 2)
· "Sannix PP-2000" (number average molecular weight = 2000, average functional group number: 2)
· "Sannix PP-3000" (number average molecular weight = 3200, average functional group number: 2)
· "Sannix PP-4000" (number average molecular weight = 4160, average functional group number: 2)

(8) Approximate equation for calibration curve: Cubic equation
(9) Concentration of sample solution: 0.5 mass% THF solution

[Measurement of hydroxyl value (OHv)]

The hydroxyl value of the obtained composition was measured through a method using an acetylation reagent in compliance with JIS K1557-1. The result is shown in Table 1.

[Property evaluation]

The obtained composition was used as a sample, and the sample was heated at 80°C for 1 hour and then allowed to stand at 25°C for 3 days. The state of the sample after standing was visually observed. If it had even a slight fluidity at the above-described temperature, it was regarded as a liquid. If it had no fluidity, it was regarded as a solid.

[Synthesis 1 of polycarbonate polyol]

31.3 g of trimethylolpropane, 413.8 g of 1,6-hexanediol, 454.9 g of diethyl carbonate, and 0.045 g of lithium acetylacetonate were mixed with each other in a 1 L two-necked glass reactor (hereinafter referred to as a reactor A) equipped with a stirrer, a thermometer, a heating device, and a cooler, and were reacted with each other at 100°C to 150°C for 8 hours while removing low-boiling point components under normal pressure. Furthermore, the reaction temperature was set to 150°C, the pressure inside the flask was reduced to 1 kPa, and the reaction was further carried out for 8 hours to obtain a polycarbonate polyol (PCP-1A).

[Synthesis 2 of polycarbonate polyol]

All operations were performed in the same manner as in Synthesis 1 of the polycarbonate polyol to obtain a polycarbonate polyol (PCP-1B).

[Synthesis 3 of polycarbonate polyol]

All operations were performed in the same manner as in Synthesis 1 of the polycarbonate polyol to obtain a polycarbonate polyol (PCP-1C).

[Synthesis 4 of polycarbonate polyol]

All operations were performed in the same manner as in Synthesis 1 of the polycarbonate polyol to obtain a polycarbonate polyol (PCP-1D).

[Synthesis 5 of polycarbonate polyol]

All operations were performed in the same manner as in Synthesis 1 of the polycarbonate polyol to obtain a polycarbonate polyol (PCP-1E).

[Synthesis 6 of polycarbonate polyol]

74.4 g of trimethylolpropane, 393.2 g of 1,6-hexanediol, 432.4 g of diethyl carbonate, and 0.045 g of lithium acetylacetonate were mixed with each other in a reactor A and were reacted with each other at 100°C to 150°C for 8 hours while removing low-boiling point components under normal pressure. Furthermore, the reaction temperature was set to 150°C, the pressure inside the flask was reduced to 1 kPa, and the reaction was further carried out for 8 hours to obtain a polycarbonate polyol (PCP-2A).

[Synthesis 7 of polycarbonate polyol]

35.2 g of trimethylolpropane, 298.5 g of 1,6-hexanediol, 468.8 g of diethyl carbonate, and 0.045 g of lithium acetylacetonate were mixed with each other in a reactor A and were reacted with each other at 100°C to 150°C for 8 hours while removing low-boiling point components under normal pressure. Furthermore, the reaction temperature was set to 150°C, the pressure inside the flask was reduced to 1 kPa, and the reaction was further carried out for 8 hours to obtain a polycarbonate polyol (PCP-3).

[Synthesis 8 of polycarbonate polyol]

0.82 g of trimethylolpropane, 199.1 g of 1,6-hexanediol, 200.1 g of diethyl carbonate, and 0.020 g of lithium acetylacetonate were mixed with each other in a reactor A and were reacted with each other at 100°C to 150°C for 8 hours while removing low-boiling point components under normal pressure. Furthermore, the reaction temperature was set to 150°C, the pressure inside the flask was reduced to 1 kPa, and the reaction was further carried out for 8 hours to obtain a polycarbonate polyol (PCP-4).

[Synthesis 9 of polycarbonate polyol]

3.31 g of trimethylolpropane, 196.81 g of 1,6-hexanediol, 199.9 g of diethyl carbonate, and 0.020 g of lithium acetylacetonate were mixed with each other in a reactor A and were reacted with each other at 100°C to 150°C for 8 hours while removing low-boiling point components under normal pressure. Furthermore, the reaction temperature was set to 150°C, the pressure inside the flask was reduced to 1 kPa, and the reaction was further carried out for 8 hours to obtain a polycarbonate polyol (PCP-5).

[Synthesis 10 of polycarbonate polyol]

8.08 g of trimethylolpropane, 192.2 g of 1,6-hexanediol, 199.8 g of diethyl carbonate, and 0.020 g of lithium acetylacetonate were mixed with each other in a reactor A and were reacted with each other at 100°C to 150°C for 8 hours while removing low-boiling point components under normal pressure. Furthermore, the reaction temperature was set to 150°C, the pressure inside the flask was reduced to 1 kPa, and the reaction was further carried out for 8 hours to obtain a polycarbonate polyol (PCP-6).

[Synthesis 11 of polycarbonate polyol]

20.53 g of trimethylolpropane, 180.3 g of 1,6-hexanediol, 199.2 g of diethyl carbonate, and 0.020 g of lithium acetylacetonate were mixed with each other in a reactor A and were reacted with each other at 100°C to 150°C for 8 hours while removing low-boiling point components under normal pressure. Furthermore, the reaction temperature was set to 150°C, the pressure inside the flask was reduced to 1 kPa, and the reaction was further carried out for 8 hours to obtain a polycarbonate polyol (PCP-7).

[Synthesis 12 of polycarbonate polyol]

24.82 g of trimethylolpropane, 176 g of 1,6-hexanediol, 199.2 g of diethyl carbonate, and 0.020 g of lithium acetylacetonate were mixed with each other in a reactor A and were reacted with each other at 100°C to 150°C for 8 hours while removing low-boiling point components under normal pressure. Furthermore, the reaction temperature was set to 150°C, the pressure inside the flask was reduced to 1 kPa, and the reaction was further carried out for 8 hours to obtain a polycarbonate polyol (PCP-8).

[Synthesis 13 of polycarbonate polyol]

30.43 g of trimethylolpropane, 170.3 g of 1,6-hexanediol, 199.2 g of diethyl carbonate, and 0.020 g of lithium acetylacetonate were mixed with each other in a reactor A and were reacted with each other at 100°C to 150°C for 8 hours while removing low-boiling point components under normal pressure. Furthermore, the reaction temperature was set to 150°C, the pressure inside the flask was reduced to 1 kPa, and the reaction was further carried out for 8 hours to obtain a polycarbonate polyol (PCP-9).

[Synthesis 14 of polycarbonate polyol]

44.63 g of trimethylolpropane, 156.2 g of 1,6-hexanediol, 199.2 g of diethyl carbonate, and 0.020 g of lithium acetylacetonate were mixed with each other in a reactor A and reacted with each other at 100°C to 150°C for 8 hours while removing low-boiling point components under normal pressure. Furthermore, the reaction temperature was set to 150°C, the pressure inside the flask was reduced to 1 kPa, and the reaction was further carried out for 8 hours to obtain a polycarbonate polyol (PCP-10).

[Table 1]

| | PCP-1A | PCP-1B | PCP-1C | PCP-1D | PCP-1E | PCP-2A | PCP-3 |
|---|---|---|---|---|---|---|---|
| 1,6-Hexanediol | 413.8 | 413.8 | 413.8 | 413.8 | 413.8 | 393.2 | 298.5 |
| 1,4-Butanediol | | | | | | | 97.5 |
| Trimethylolpropane | 31.3 | 31.3 | 31.3 | 31.3 | 31.3 | 74.4 | 35.2 |
| Diethyl carbonate | 454.9 | 454.9 | 454.9 | 454.9 | 454.9 | 432.4 | 468.8 |
| Lithium acetylacetonate | 0.045 | 0.045 | 0.045 | 0.045 | 0.045 | 0.045 | 0.045 |
| Total | 900.0 | 900.0 | 900.0 | 900.0 | 900.0 | 900.0 | 900.0 |
| Number average molecular weight (g/mol) | 1790.0 | 1881.0 | 2010.0 | 1823.0 | 1949.0 | 1030.0 | 1890 |
| OHv (mgKOH/g) | 90.7 | 86.2 | 78.2 | 87.3 | 82.5 | 168 | 73.9 |
| Property at 25°C | Solid | Solid | Solid | Solid | Solid | Solid | Liquid |
| Deemed average number of functional groups | 2.89 | 2.89 | 2.80 | 2.84 | 2.87 | 3.08 | 2.49 |

| | PCP-4 | PCP-5 | PCP-6 | PCP-7 | PCP-8 | PCP-9 | PCP-10 |
|---|---|---|---|---|---|---|---|
| 1,6-Hexanediol | 199.1 | 196.81 | 192.2 | 180.3 | 176 | 170.3 | 156.2 |
| 1,4-Butanediol | | | | | | | |
| Trimethylolpropane | 0.82 | 3.31 | 8.08 | 20.53 | 24.82 | 30.43 | 44.63 |
| Diethyl carbonate | 200.1 | 199.9 | 199.8 | 199.2 | 199.2 | 199.2 | 199.2 |
| Lithium acetylacetonate | 0.02 | 0.02 | 0.02 | 0.02 | 0.02 | 0.02 | 0.02 |
| Total | 400.0 | 400.0 | 400.1 | 400.1 | 400.0 | 400.0 | 400.1 |
| Number average molecular weight (g/mol) | 1708 | 1741 | 1781 | 1459 | 1680 | 1479 | 1690 |
| OHv (mgKOH/g) | 63.9 | 67 | 73 | 106.1 | 103.9 | 121.7 | 130 |
| Property at 25°C | Solid | Solid | Solid | Solid | Solid | Solid | Liquid |
| Deemed average number of functional groups | 1.95 | 2.08 | 2.32 | 2.76 | 3.11 | 3.21 | 3.92 |
| 1,6-Hexanediol: Manufactured by BASF JAPAN<br>1,4-butanediol: Manufactured by FUJIFILM Wako Chemical Corporation<br>Trimethylolpropane: Manufactured by Sigma-Aldrich<br>Diethyl carbonate: Manufactured by Sigma-Aldrich<br>Lithium acetylacetonate: Manufactured by Sigma-Aldrich | | | | | | | |

(Example 1: Production 1 of polyurethane resin emulsion)

77.6 g of N-980N (manufactured by Tosoh Corporation: number average molecular weight of 2,000; hydroxyl value of 56.11 mgKOH/g; 1,6-hexanediol-based polycarbonate diol), 3.04 g of 1,6-hexanediol, 26.9 g of PCP-1A, 75 g of acetone, 5.29 g of 2,2-dimethylolpropanoic acid, and 31.2 g of isophorone diisocyanate were added to a reactor having a capacity of 1 L (hereinafter referred to as a reactor B) equipped with a stirrer, a thermometer, a nitrogen seal tube, and a cooler, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.286 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water and 1.99 g of isophoronediamine) was added thereto within 30

minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-1).

(Example 2: Production 2 of polyurethane resin emulsion)

51.8 g of N-980N, 1.99 g of 1,6-hexanediol, 53.8 g of PCP-1A, 75 g of acetone, 5.29 g of 2,2-dimethylolpropanoic acid, and 31.2 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.268 mmol/g. Subsequently, emulsification and operations after emulsification were performed in the same manner as in Example 1 to obtain an aqueous polyurethane resin emulsion composition (PUD-2).

(Example 3: Production 3 of polyurethane resin emulsion)

25.9 g of N-980N, 0.95 g of 1,6-hexanediol, 80.6 g of PCP-1A, 75 g of acetone, 5.29 g of 2,2-dimethylolpropanoic acid, and 31.2 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.270 mmol/g. Subsequently, emulsification and operations after emulsification were performed in the same manner as in Example 1 to obtain an aqueous polyurethane resin emulsion composition (PUD-3).

(Example 4: Production 4 of polyurethane resin emulsion)

84.1 g of N-980N, 4.32 g of 1,6-hexanediol, 15.6 g of PCP-2A, 75 g of acetone, 5.29 g of 2,2-dimethylolpropanoic acid, and 31.2 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.284 mmol/g. Subsequently, emulsification and operations after emulsification were performed in the same manner as in Example 1 to obtain an aqueous polyurethane resin emulsion composition (PUD-4).

(Example 5: Production 5 of polyurethane resin emulsion)

70.4 g of N-980N, 2.37 g of 1,6-hexanediol, 31.2 g of PCP-2A, 75 g of acetone, 5.29 g of 2,2-dimethylolpropanoic acid, and 34.7 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.280 mmol/g. Subsequently, emulsification and operations after emulsification were performed in the same manner as in Example 1 to obtain an aqueous polyurethane resin emulsion composition (PUD-5).

(Example 6: Production 6 of polyurethane resin emulsion)

56.8 g of N-980N, 0.41 g of 1,6-hexanediol, 46.8 g of PCP-2A, 75 g of acetone, 5.29 g of 2,2-dimethylolpropanoic acid, and 34.7 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.355 mmol/g. Subsequently, emulsification and operations after emulsification were performed in the same manner as in Example 1 to obtain an aqueous polyurethane resin emulsion composition (PUD-6).

(Example 7: Production 7 of polyurethane resin emulsion)

78.9 g of N-980N, 3.40 g of 1,6-hexanediol, 27.4 g of PCP-1B, 75 g of acetone, 5.29 g of 2,2-dimethylolpropanoic acid, and 29.9 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.170 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water

and 0.99 g of isophoronediamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-7).

(Example 8: Production 8 of polyurethane resin emulsion)

52.5 g of N-980N, 2.42 g of 1,6-hexanediol, 54.9 g of PCP-1B, 75 g of acetone, 5.29 g of 2,2-dimethylolpropanoic acid, and 29.9 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.169 mmol/g. Subsequently, emulsification and operations after emulsification were performed in the same manner as in Example 7 to obtain an aqueous polyurethane resin emulsion composition (PUD-8).

(Example 9: Production 9 of polyurethane resin emulsion)

75.7 g of N-980N, 3.26 g of 1,6-hexanediol, 26.3 g of PCP-1B, 75 g of acetone, 5.29 g of 2,2-dimethylolpropanoic acid, and 32.4 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.266 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water and 2.99 g of isophoronediamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-9).

(Example 10: Production 10 of polyurethane resin emulsion)

50.3 g of N-980N, 2.32 g of 1,6-hexanediol, 52.6 g of PCP-1B, 75 g of acetone, 5.29 g of 2,2-dimethylolpropanoic acid, and 32.4 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.263 mmol/g. Subsequently, emulsification and operations after emulsification were performed in the same manner as in Example 9 to obtain an aqueous polyurethane resin emulsion composition (PUD-10).

(Example 11: Production 11 of polyurethane resin emulsion)

84.6 g of N-980N, 28.2 g of PCP-1B, 75 g of acetone, 5.29 g of 2,2-dimethylolpropanoic acid, and 25.9 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.238 mmol/g. Subsequently, emulsification and operations after emulsification were performed in the same manner as in Example 1 to obtain an aqueous polyurethane resin emulsion composition (PUD-11).

(Example 12: Production 12 of polyurethane resin emulsion)

55.5 g of N-980N, 55.5 g of PCP-1B, 75 g of acetone, 5.29 g of 2,2-dimethylolpropanoic acid, and 27.6 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.231 mmol/g. Subsequently, emulsification and operations after emulsification were performed in the same manner as in Example 1 to obtain an aqueous polyurethane resin emulsion composition (PUD-12).

(Example 13: Production 13 of polyurethane resin emulsion)

27.4 g of N-980N, 82.3 g of PCP-1B, 75 g of acetone, 5.29 g of 2,2-dimethylolpropanoic acid, and 29.0 g of isophorone diisocyanate were added to a reactor B, heated to 60°C, and stirred at the same temperature for 30 minutes,

and then 0.12 g of U-600 was added thereto to cause a reaction for 5 hours. The content of unreacted isocyanate groups at the end of urethanization with respect to the above-described added amount was 0.242 mmol/g. Subsequently, emulsification and operations after emulsification were performed in the same manner as in Example 1 to obtain an aqueous polyurethane resin emulsion composition (PUD-13).

(Example 14: Production 14 of polyurethane resin emulsion)

98.2 g of N-980N, 10.9 g of PCP-1C, 75 g of acetone, 5.29 g of 2,2-dimethylolpropanoic acid, and 27.6 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.322 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water and 3.98 g of isophoronediamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-14).

(Example 15: Production 15 of polyurethane resin emulsion)

76.9 g of N-980N, 3.70 g of 1,6-hexanediol, 26.9 g of PCP-3, 75 g of acetone, 5.29 g of 2,2-dimethylolpropanoic acid, and 31.2 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.143 mmol/g. Subsequently, emulsification and operations after emulsification were performed in the same manner as in Example 1 to obtain an aqueous polyurethane resin emulsion composition (PUD-15).

(Example 16: Production 16 of polyurethane resin emulsion)

50.6 g of N-980N, 3.11 g of 1,6-hexanediol, 53.7 g of PCP-3, 75 g of acetone, 5.29 g of 2,2-dimethylolpropanoic acid, and 31.2 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.223 mmol/g. Subsequently, emulsification and operations after emulsification were performed in the same manner as in Example 1 to obtain an aqueous polyurethane resin emulsion composition (PUD-16).

(Example 17: Production 17 of polyurethane resin emulsion)

54.6 g of N-980N, 2.45 g of 1,6-hexanediol, 57.1 g of PCP-1D, 75 g of acetone, 5.29 g of 2,2-dimethylolpropanoic acid, and 24.5 g of hexamethylene diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.192 mmol/g. Subsequently, emulsification and operations after emulsification were performed in the same manner as in Example 1 to obtain an aqueous polyurethane resin emulsion composition (PUD-17).

(Example 18: Production 18 of polyurethane resin emulsion)

51.3 g of Placcel 220 (manufactured by Daicel Corporation: number average molecular weight of 2,000; hydroxyl value of 56.11 mgKOH/g; ε-caprolactone ring-opening polymerization-based ester polyol; number average molecular weight of 2), 2.44 g of 1,6-hexanediol, 53.7 g of PCP-1E, 75 g of acetone, 5.29 g of 2,2-dimethylolpropanoic acid, and 31.2 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.251 mmol/g. Subsequently, emulsification and operations after emulsification were performed in the same manner as in Example 1 to obtain an aqueous polyurethane resin emulsion composition (PUD-18).

(Comparative Example 1: Production 19 of polyurethane resin emulsion)

103.4 g of N-980N, 4.08 g of 1,6-hexanediol, 75 g of acetone, 5.29 g of 2,2-dimethylolpropanoic acid, and 31.2 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.197 mmol/g. Subsequently, emulsification and operations after emulsification were performed in the same manner as in Example 1 to obtain an aqueous polyurethane resin emulsion composition (PUD-19).

(Comparative Example 2: Production 20 of polyurethane resin emulsion)

99.1 g of N-980N, 3.91 g of 1,6-hexanediol, 75 g of acetone, 5.29 g of 2,2-dimethylolpropanoic acid, and 33.6 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.340 mmol/g. Subsequently, emulsification and operations after emulsification were performed in the same manner as in Example 14 to obtain an aqueous polyurethane resin emulsion composition (PUD-20).

(Comparative Example 3: Production 21 of polyurethane resin emulsion)

97.0 g of N-980N, 3.82 g of 1,6-hexanediol, 75 g of acetone, 5.29 g of 2,2-dimethylolpropanoic acid, and 34.8 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.263 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water and 4.97 g of isophoronediamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-21).

(Comparative Example 4: Production 22 of polyurethane resin emulsion)

101.1 g of N-980N, 3.56 g of 1,6-hexanediol, 2.15 g of trimethylolpropane, 75 g of acetone, 5.43 g of 2,2-dimethylolpropanoic acid, and 35.6 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.275 mmol/g. Subsequently, emulsification and operations after emulsification were performed in the same manner as in Comparative Example 5 to obtain an aqueous polyurethane resin emulsion composition (PUD-22).

(Comparative Example 5: Production 23 of polyurethane resin emulsion)

101.9 g of N-980N, 0.69 g of 1,6-hexanediol, 4.29 g of trimethylolpropane, 75 g of acetone, 5.43 g of 2,2-dimethylolpropanoic acid, and 35.6 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.328 mmol/g. Subsequently, emulsification and operations after emulsification were performed in the same manner as in Comparative Example 5 to obtain an aqueous polyurethane resin emulsion composition (PUD-23).

(Comparative Example 6: Production 24 of polyurethane resin emulsion)

106.8 g of N-980N, 1.59 g of 1,6-hexanediol, 2.06 g of trimethylolpropane, 75 g of acetone, 5.43 g of 2,2-dimethylolpropanoic acid, and 32.0 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.305 mmol/g. Subsequently, emulsification and operations after emulsification were performed in the same manner as in Comparative Example 5 to obtain an aqueous polyurethane resin emulsion composition (PUD-24).

[Table 2]

| | | Example | | | | | | | | |
|---|---|---|---|---|---|---|---|---|---|---|
| | | 1 | 2 | 3 | 4 | 5 | 6 | 7 | 8 | 9 |
| | | PUD-1 | PUD-2 | PUD-3 | PUD-4 | PUD-5 | PUD-6 | PUD-7 | PUD-8 | PUD-9 |
| Polyol (B') | N-980N | 77.6 | 51.8 | 25.9 | 84.1 | 70.4 | 56.8 | 78.9 | 52.5 | 75.7 |
| | Trimethylolpropane Placcel 220 | | | | | | | | | |
| (a-1) | 1,6-Hexanediol | 3.04 | 1.99 | 0.95 | 4.32 | 2.37 | 0.41 | 3.40 | 2.42 | 3.26 |
| Polycarbonate polyol (B) | PCP-1A | 26.9 | 53.8 | 80.6 | | | | | | |
| | PCP-1B | | | | | | | 27.4 | 54.9 | 26.3 |
| | PCP-1C | | | | | | | | | |
| | PCP-1D | | | | | | | | | |
| | PCP-1E | | | | | | | | | |
| | PCP-2A | | | | 15.6 | 31.2 | 46.8 | | | |
| | PCP-3 | | | | | | | | | |
| Hydrophilic agent (C) | 2,2-Dimethylolpropanoic acid | 5.29 | 5.29 | 5.29 | 5.29 | 5.29 | 5.29 | 5.29 | 5.29 | 5.29 |
| Isocyanate (D) | Isophorone diisocyanate | 31.2 | 31.2 | 31.2 | 34.7 | 34.7 | 34.7 | 29.9 | 29.9 | 32.4 |
| | Hexamethylene diisocyanate | | | | | | | | | |
| NCO amount of prepolymer (E) (mmol/g) | | 0.286 | 0.268 | 0.27 | 0.284 | 0.28 | 0.355 | 0.17 | 0.169 | 0.266 |
| Neutralizer (F) | Triethylamine | 3.99 | 3.99 | 3.99 | 3.99 | 3.99 | 3.99 | 3.99 | 3.99 | 3.99 |
| Chain extender (G) | Isophoronediamine | 1.99 | 1.99 | 1.99 | 1.99 | 1.99 | 1.99 | 0.99 | 0.99 | 2.98 |
| Catalyst | U-600 | 0.12 | 0.12 | 0.12 | 0.12 | 0.12 | 0.12 | 0.12 | 0.12 | 0.12 |
| Anti-foaming agent | KL-245 | 0.18 | 0.18 | 0.18 | 0.18 | 0.18 | 0.18 | 0.18 | 0.18 | 0.18 |
| Solvent | Acetone | 75 | 75 | 75 | 75 | 75 | 75 | 75 | 75 | 75 |
| | Water | 350 | 350 | 350 | 350 | 350 | 350 | 350 | 350 | 350 |
| Total | - | 575.5 | 575.5 | 575.5 | 575.5 | 575.5 | 575.6 | 575.4 | 575.4 | 575.5 |
| Average hydroxyl value of polyol (A) (KOHmg/g) | | 90 | 90 | 90 | 110 | 110 | 110 | 90 | 90 | 90 |
| Content of polycarbonate polyol (B) (mass%) | | 25 | 50 | 75 | 15 | 30 | 45 | 25 | 50 | 25 |
| Cross-linking density (mmol/g) | | 0.08 | 0.16 | 0.28 | 0.107 | 0.21 | 0.32 | 0.096 | 0.192 | 0.092 |
| Total content of urea groups (mmol/g) | | 0.29 | 0.28 | 0.289 | 0.29 | 0.29 | 0.35 | 0.17 | 0.17 | 0.32 |
| Content of urea group derived from amine compound (mmol/g) | | 0.16 | 0.16 | 0.16 | 0.16 | 016 | 0.16 | 0.08 | 0.08 | 0.24 |

(continued)

| | Example | | | | | | | | |
|---|---|---|---|---|---|---|---|---|---|
| | 1 | 2 | 3 | 4 | 5 | 6 | 7 | 8 | 9 |
| | PUD-1 | PUD-2 | PUD-3 | PUD-4 | PUD-5 | PUD-6 | PUD-7 | PUD-8 | PUD-9 |
| Content of urea group derived from water (mmol/g) | 0.13 | 0.12 | 0.12 | 0.13 | 0.13 | 0.19 | 0.09 | 0.09 | 0.08 |
| Proportion of amine compound-derived urea groups (mol%) | 54.3 | 56.9 | 56.6 | 54.6 | 55.2 | 46.2 | 47.6 | 47.8 | 75.3 |

[Table 3]

| | | Example | | | | | | | | |
|---|---|---|---|---|---|---|---|---|---|---|
| | | 10 | 11 | 12 | 13 | 14 | 15 | 16 | 17 | 18 |
| | | PUD-10 | PUD-11 | PUD-12 | PUD-13 | PUD-14 | PUD-15 | PUD-16 | PUD-17 | PUD-18 |
| Polyol (B') | N-980N | 50.3 | 84.6 | 55.6 | 27.4 | 98.2 | 76.9 | 50.6 | 54.6 | |
| | Trimethylolpropane | | | | | | | | | |
| | Placcel 220 | | | | | | | | | 51.3 |
| (a-1) | 1,6-Hexanediol | 2.32 | | | | | 3.70 | 3.11 | 2.45 | 2.44 |
| Polycarbonate polyol (B) | PCP-1A | | | | | | | | | |
| | PCP-1B | 52.6 | 28.2 | 55.6 | 82.3 | | | | | |
| | PCP-1C | | | | | 10.9 | | | | |
| | PCP-1D | | | | | | | | 57.1 | |
| | PCP-1E | | | | | | | | | 53.7 |
| | PCP-2A | | | | | | | | | |
| | PCP-3 | | | | | | 26.9 | 53.7 | | |
| Hydrophilic agent (C) | 2,2-Dimethylolpropanoic acid | 5.29 | 5.29 | 5.29 | 5.29 | 5.29 | 5.29 | 5.29 | 5.29 | 5.29 |
| Isocyanate (D) | Isophorone diisocyanate | 32.4 | 25.9 | 27.5 | 29.0 | 27.5 | 31.2 | 31.2 | | 31.2 |
| | Hexamethylene diisocyanate | | | | | | | | 24.5 | |
| NCO amount of prepolymer (E) (mmol/g) | | 0.263 | 0.238 | 0.231 | 0.242 | 0.322 | 0.143 | 0.223 | 0.192 | 0.251 |
| Neutralizer (F) | Triethylamine | 3.99 | 3.99 | 3.99 | 3.99 | 3.99 | 3.99 | 3.99 | 3.99 | 3.99 |
| Chain extender (G) | Isophoronediamine | 2.98 | 1.99 | 1.99 | 1.99 | 3.98 | 1.99 | 1.99 | 1.99 | 1.99 |
| Catalyst | U-600 | 0.12 | 0.12 | 0.12 | 0.12 | 0.12 | 0.12 | 0.12 | 0.12 | 0.12 |
| Anti-foaming agent | KL-245 | 0.18 | 0.18 | 0.18 | 0.18 | 0.18 | 0.18 | 0.18 | 0.18 | 0.18 |
| Solvent | Acetone | 75 | 75 | 75 | 75 | 75 | 75 | 75 | 75 | 75 |
| | Water | 350 | 350 | 350 | 350 | 350 | 350 | 350 | 350 | 350 |
| Total | - | 575.5 | 575.5 | 575.5 | 575.5 | 575.5 | 575.4 | 575.5 | 575.4 | 575.5 |
| Average hydroxyl value of polyol (A) (KOHmg/g) | | 90 | 62 | 70 | 78 | 57 | 90 | 90 | 90 | 90 |
| Content of polycarbonate polyol (B) (mass%) | | 50 | 25 | 50 | 75 | 10 | 25 | 50 | 50 | 50 |

(continued)

| | Example | | | | | | | | |
|---|---|---|---|---|---|---|---|---|---|
| | 10 | 11 | 12 | 13 | 14 | 15 | 16 | 17 | 18 |
| | PUD-10 | PUD-11 | PUD-12 | PUD-13 | PUD-14 | PUD-15 | PUD-16 | PUD-17 | PUD-18 |
| Cross-linking density (mmol/g) | 0.185 | 0.099 | 0.195 | 0.288 | 0.035 | 0.081 | 0.162 | 0.203 | 0.16 |
| Total content of urea groups (mmol/g) | 0.32 | 0.26 | 0.25 | 0.26 | 0.40 | 0.19 | 0.25 | 0.22 | 0.27 |
| Content of urea group derived from amine compound (mmol/g) | 0.24 | 0.16 | 0.16 | 0.16 | 0.32 | 0.16 | 0.16 | 0.16 | 0.16 |
| Content of urea group derived from water (mmol/g) | 0.08 | 0.10 | 0.09 | 0.10 | 0.08 | 0.03 | 0.09 | 0.06 | 0.11 |
| Proportion of amine compound-derived urea groups (mol%) | 75.9 | 61.9 | 63.2 | 61.2 | 80.1 | 85.4 | 64.7 | 71.4 | 59.6 |

[Table 4]

| | | Comparative Example 1 | Comparative Example 2 | Comparative Example 3 | Comparative Example 4 | Comparative Example 5 | Comparative Example 6 |
|---|---|---|---|---|---|---|---|
| | | PUD-19 | PUD-20 | PUD-21 | PUD-22 | PUD-23 | PUD-24 |
| Polyol (B') | N-980N | 103.4 | 99.1 | 97.0 | 101.1 | 101.9 | 106.8 |
| | Trimethylol propane | | | | 2.15 | 4.29 | 2.06 |
| (a-1) | 1,6-Hexanediol | 4.08 | 3.91 | 3.82 | 3.56 | 0.69 | 1.59 |
| Polycarbonate polyol (B) | PCP-1A | | | | | | |
| | PCP-1B | | | | | | |
| | PCP-1C | | | | | | |
| | PCP-1D | | | | | | |
| | PCP-1E | | | | | | |
| | PCP-2A | | | | | | |
| | PCP-3 | | | | | | |
| Hydrophilic agent (C) | 2,2-Dimethylol propanoic acid | 5.29 | 5.29 | 5.29 | 5.43 | 5.43 | 5.43 |
| Isocyanate (D) | Isophorone diisocyanate | 31.2 | 33.6 | 34.8 | 35.6 | 35.6 | 32.0 |
| | Hexamethylene diisocyanate | | | | | | |
| NCO amount of prepolymer (E) (mmol/g) | | 0.197 | 0.34 | 0.263 | 0.275 | 0.328 | 0.305 |
| Neutralizer (F) | Triethylamine | 3.99 | 3.99 | 3.99 | 4.10 | 4.10 | 3.99 |
| Chain extender (G) | Isophorone diamine | 1.99 | 3.98 | 4.97 | 2.04 | 2.04 | 2.04 |
| Catalyst | U-600 | 0.12 | 0.12 | 0.12 | 0.12 | 0.12 | 0.12 |
| Anti-foaming agent | KL-245 | 0.18 | 0.18 | 0.18 | 0.18 | 0.18 | 0.18 |
| Solvent | Acetone | 75 | 75 | 75 | 75 | 75 | 75 |
| | Water | 350 | 350 | 350 | 350 | 350 | 350 |
| Total | - | 575.4 | 575.5 | 575.4 | 579.6 | 579.7 | 579.5 |
| Average hydroxyl value of polyol (A) (KOHmg/g) | | 90 | 90 | 90 | 110 | 110 | 90 |
| Content of polycarbonate polyol (B) (mass%) | | 0 | 0 | 0 | 0 | 0 | 0 |
| Cross-linking density (mmol/g) | | 0 | 0 | 0 | 0.11 | 0.21 | 0.079 |
| Total content of urea groups (mmol/g) | | 0.23 | 0.41 | 0.39 | 0.28 | 0.32 | 0.31 |
| Content of urea group derived from amine compound (mmol/g) | | 0.16 | 0.32 | 0.40 | 0.16 | 0.16 | 0.16 |
| Content of urea group derived from water (mmol/g) | | 0.07 | 0.09 | -0.01 | 0.12 | 0.16 | 0.15 |

(continued)

| | Comparative Example 1 | Comparative Example 2 | Comparative Example 3 | Comparative Example 4 | Comparative Example 5 | Comparative Example 6 |
|---|---|---|---|---|---|---|
| | PUD-19 | PUD-20 | PUD-21 | PUD-22 | PUD-23 | PUD-24 |
| Proportion of amine compound-derived urea groups (mol%) | 70.2 | 77.5 | 101.4 | 56.3 | 49.4 | 52.2 |

The content of urea groups derived from water was calculated from the measurement results of the NCO content, and can be a negative calculated value due to an error in the NCO content. In Table 4, regarding the numerical values of the contents of the urea groups derived from water, a negative proportion is written as "0.01." However, this is obtained by rounding off the third decimal place and is actually 0.005.

(Example 19: Production 25 of polyurethane resin emulsion)

50.2 g of N-980N, 3.52 g of 1,6-hexanediol, 53.7 g of PCP-5, 75 g of acetone, 5.29 g of 2,2-dimethylolpropanoic acid, and 31.2 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.207 mmol/g. Subsequently, emulsification and operations after emulsification were performed in the same manner as in Example 1 to obtain an aqueous polyurethane resin emulsion composition (PUD-25).

(Example 20: Production 26 of polyurethane resin emulsion)

50.6 g of N-980N, 3.16 g of 1,6-hexanediol, 53.7 g of PCP-6, 75 g of acetone, 5.29 g of 2,2-dimethylolpropanoic acid, and 31.2 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.229 mmol/g. Subsequently, emulsification and operations after emulsification were performed in the same manner as in Example 1 to obtain an aqueous polyurethane resin emulsion composition (PUD-26).

(Example 21: Production 27 of polyurethane resin emulsion)

52.6 g of N-980N, 1.18 g of 1,6-hexanediol, 53.7 g of PCP-7, 75 g of acetone, 5.29 g of 2,2-dimethylolpropanoic acid, and 31.2 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.253 mmol/g. Subsequently, emulsification and operations after emulsification were performed in the same manner as in Example 1 to obtain an aqueous polyurethane resin emulsion composition (PUD-27).

(Example 22: Production 28 of polyurethane resin emulsion)

52.4 g of N-980N, 1.31 g of 1,6-hexanediol, 53.7 g of PCP-8, 75 g of acetone, 5.29 g of 2,2-dimethylolpropanoic acid, and 31.2 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.268 mmol/g. Subsequently, emulsification and operations after emulsification were performed in the same manner as in Example 1 to obtain an aqueous polyurethane resin emulsion composition (PUD-28).

(Example 23: Production 29 of polyurethane resin emulsion)

53.5 g of N-980N, 0.24 g of 1,6-hexanediol, 53.7 g of PCP-9, 75 g of acetone, 5.29 g of 2,2-dimethylolpropanoic acid, and 31.2 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.205 mmol/g. Subsequently, emulsification and operations after emulsification were performed in the same manner as in Example 1 to obtain an aqueous polyurethane resin emulsion composition (PUD-29).

(Comparative Example 7: Production 30 of polyurethane resin emulsion)

50.0 g of N-980N, 3.71 g of 1,6-hexanediol, 53.7 g of PCP-4, 75 g of acetone, 5.29 g of 2,2-dimethylolpropanoic acid, and 31.2 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.224 mmol/g. Subsequently, emulsification and operations after emulsification were performed in the same manner as in Example 1 to obtain an aqueous polyurethane resin emulsion composition (PUD-30).

(Comparative Example 8: Production 31 of polyurethane resin emulsion)

56.8 g of N-980N, 53.7 g of PCP-10, 75 g of acetone, 5.29 g of 2,2-dimethylolpropanoic acid, and 31.2 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.186 mmol/g. Subsequently, emulsification and operations after emulsification were performed in the same manner as in Example 1 to obtain an aqueous polyurethane resin emulsion composition (PUD-31).

[Table 5]

| | | Example | | | | | | Comparative Example | |
|---|---|---|---|---|---|---|---|---|---|
| | | 19 | 20 | 2 | 21 | 22 | 23 | 7 | 8 |
| | | PUD-25 | PUD-26 | PUD-2 | PUD-27 | PUD-28 | PUD-29 | PUD-30 | PUD-31 |
| Polyol (B') | N-980N | 50.2 | 50.6 | 51.8 | 52.6 | 52.4 | 53.5 | 50.0 | 56.8 |
| | Trimethylolpropane | | | | | | | | |
| (a-1) | 1,6-Hexanediol | 3.52 | 3.16 | 1.99 | 1.18 | 1.31 | 0.24 | 3.71 | |
| Polycarbonate polyol (B) | PCP-1A | | | 53.8 | | | | | |
| | PCP-4 | | | | | | | 53.7 | |
| | PCP-5 | 53.7 | | | | | | | |
| | PCP-6 | | 53.7 | | | | | | |
| | PCP-7 | | | | 53.7 | | | | |
| | PCP-8 | | | | | 53.7 | | | |
| | PCP-9 | | | | | | 53.7 | | |
| | PCP-10 | | | | | | | | 50.7 |
| Hydrophilic agent (C) | 2,2-Dimethylolpropanoic acid | 5.29 | 5.29 | 5.29 | 5.29 | 5.29 | 5.29 | 5.29 | 5.29 |
| Isocyanate (D) | Isophorone diisocyanate | 31.2 | 31.2 | 31.2 | 31.2 | 31.2 | 31.2 | 31.2 | 31.2 |
| | Hexamethylene diisocyanate | | | | | | | | |
| NCO amount of prepolymer (E) (mmol/g) | | 0.207 | 0.229 | 0.268 | 0.253 | 0.268 | 0.205 | 0.224 | 0.186 |
| Neutralizer (F) | Triethylamine | 3.99 | 3.99 | 3.99 | 3.99 | 3.99 | 3.99 | 3.99 | 3.99 |
| Amine (G) | Isophoronediamine | 1.99 | 1.99 | 1.99 | 1.99 | 1.99 | 1.99 | 1.99 | 1.99 |
| Catalyst | U-600 | 0.12 | 0.12 | 0.12 | 0.12 | 0.12 | 0.12 | 0.12 | 0.12 |
| Anti-foaming agent | KL-245 | 0.18 | 0.18 | 0.18 | 0.18 | 0.18 | 0.18 | 0.18 | 0.18 |
| Solvent | Acetone | 75 | 75 | 75 | 75 | 75 | 75 | 75 | 75 |
| | Water | 350 | 350 | 350 | 350 | 350 | 350 | 350 | 350 |
| Total | - | 575.4 | 575.5 | 575.5 | 575.5 | 575.5 | 575.4 | 575.5 | 575.4 |
| Average hydroxyl value of polyol (A) (KOHmg/g) | | 90 | 90 | 90 | 90 | 90 | 90 | 90 | 90 |
| Content of polycarbonate polyol (B) (mass%) | | 50 | 50 | 50 | 50 | 50 | 50 | 50 | 47.2 |
| Cross-linking density (mmol/g) | | 0.04 | 0.10 | 0.16 | 0.26 | 0.29 | 0.40 | 0.01 | 0.48 |
| Total content of urea groups (mmol/g) | | 0.24 | 0.25 | 0.28 | 0.27 | 0.28 | 0.23 | 0.25 | 0.22 |

(continued)

| | Example | | | | | | Comparative Example | |
|---|---|---|---|---|---|---|---|---|
| | 19 | 20 | 2 | 21 | 22 | 23 | 7 | 8 |
| | PUD-25 | PUD-26 | PUD-2 | PUD-27 | PUD-28 | PUD-29 | PUD-30 | PUD-31 |
| Content of urea group derived from amine compound (mmol/g) | 0.16 | 0.16 | 0.16 | 0.16 | 0.16 | 0.16 | 0.16 | 0.16 |
| Content of urea group derived from water (mmol/g) | 0.08 | 0.09 | 0.12 | 0.11 | 0.12 | 0.07 | 0.09 | 0.06 |
| Proportion of amine compound-derived urea groups (mol%) | 68.0 | 63.6 | 56.9 | 59.3 | 56.9 | 68.4 | 64.5 | 72.9 |

(Example 24: Production 32 of polyurethane resin emulsion)

51.2 g of N-980N, 53.7 g of PCP-1D, 2.6 g of 1,6-hexanediol, 75 g of acetone, 5.29 g of 2,2-dimethylolpropanoic acid, and 27.1 g of isophorone diisocyanate were added to a reactor B, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.257 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water and 3.68 g of isophoronediamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-32).

(Example 25: Production 33 of polyurethane resin emulsion)

In a reactor B, an isocyanate group-terminated urethane prepolymer was obtained in the same manner as in Example 24. The content of unreacted isocyanate groups at the end of urethanization with respect to the above-described added amount was 0.241 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water and 2.67 g of isophoronediamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-33).

(Example 26: Production 34 of polyurethane resin emulsion)

In a reactor B, an isocyanate group-terminated urethane prepolymer was obtained in the same manner as in Example 24. The content of unreacted isocyanate groups at the end of urethanization with respect to the above-described added amount was 0.268 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water and 1.99 g of isophoronediamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-34).

(Example 27: Production 35 of polyurethane resin emulsion)

In a reactor B, an isocyanate group-terminated urethane prepolymer was obtained in the same manner as in Example 24. The content of unreacted isocyanate groups at the end of urethanization with respect to the above-described added amount was 0.259 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water and 0.97 g of isophoronediamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-35).

(Example 28: Production 36 of polyurethane resin emulsion)

In a reactor B, an isocyanate group-terminated urethane prepolymer was obtained in the same manner as in Example 24. The content of unreacted isocyanate groups at the end of urethanization with respect to the above-described added amount was 0.258 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water and 0.49 g of isophoronediamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask

flask and distilled under reduced pressure to remove 75 g of acetone and 50 g of water to obtain an aqueous polyurethane resin emulsion composition (PUD-36).

(Example 29: Production 37 of polyurethane resin emulsion)

In a reactor B, an isocyanate group-terminated urethane prepolymer was obtained in the same manner as in Example 24. The content of unreacted isocyanate groups at the end of urethanization with respect to the above-described added amount was 0.271 mmol/g. Subsequently, 3.99 g of triethylamine was added to neutralize carboxyl groups, and then 350 g of water was added while stirring for emulsification. After emulsification, 0.18 g of KL-245 was added thereto, and an amine extension reaction was carried out at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-37).

(Example 30: Production 38 of polyurethane resin emulsion)

55.8 g of N-980N, 55.8 g of PCP-1D, 75 g of acetone, 5.29 g of 2,2-dimethylolpropanoic acid, and 27.1 g of isophorone diisocyanate were added to a reactor B, heated to 60°C, and stirred at the same temperature for 30 minutes, and then 0.12 g of U-600 was added thereto to cause a reaction for 2 hours and 45 minutes. The content of unreacted isocyanate groups at the end of urethanization with respect to the above-described added amount was 0.399 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water and 3.20 g of isophoronediamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-38).

(Example 31: Production 39 of polyurethane resin emulsion)

55.8 g of N-980N, 55.8 g of PCP-1D, 75 g of acetone, 5.29 g of 2,2-dimethylolpropanoic acid, and 27.1 g of isophorone diisocyanate were added to a reactor B, heated to 60°C, and stirred at the same temperature for 30 minutes, and then 0.12 g of U-600 was added thereto to cause a reaction for 4 hours and 15 minutes. The content of unreacted isocyanate groups at the end of urethanization with respect to the above-described added amount was 0.345 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water and 2.77 g of isophoronediamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-39).

(Comparative Example 9: Production 40 of polyurethane resin emulsion)

55.8 g of N-980N, 55.8 g of PCP-1D, 75 g of acetone, 5.29 g of 2,2-dimethylolpropanoic acid, and 27.1 g of isophorone diisocyanate were added to a reactor B, heated to 60°C, and stirred at the same temperature for 30 minutes, and then 0.12 g of U-600 was added thereto to cause a reaction for 1 hour and 20 minutes. The content of unreacted isocyanate groups at the end of urethanization with respect to the above-described added amount was 0.780 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water and 6.25 g of isophoronediamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-40).

[Table 6]

| | | Example | | | | | | | | Comparative Example |
|---|---|---|---|---|---|---|---|---|---|---|
| | | 24 | 25 | 26 | 27 | 28 | 29 | 30 | 31 | 9 |
| | | PUD-32 | PUD-33 | PUD-34 | PUD-35 | PUD-36 | PUD-37 | PUD-38 | PUD-39 | PUD-40 |
| Polyol (B') | N-980N<br>Trimethylolpropane | 51.2 | 51.2 | 51.2 | 51.2 | 51.2 | 51.2 | 55.8 | 55.8 | 55.8 |
| (a-1) | 1,6-Hexanediol | 2.60 | 2.60 | 2.60 | 2.60 | 2.60 | 2.60 | | | |
| Polycarbonate polyol (B) | PCP-1D | 53.7 | 53.7 | 53.7 | 53.7 | 53.7 | 53.7 | 55.8 | 55.8 | 55.8 |
| Hydrophilic agent (C) | 2,2-Dimethylolpropanoic acid | 5.29 | 5.29 | 5.29 | 5.29 | 5.29 | 5.29 | 5.29 | 5.29 | 5.29 |
| Isocyanate (D) | Isophorone diisocyanate<br>Hexamethylene diisocyanate | 31.2 | 31.2 | 31.2 | 31.2 | 31.2 | 31.2 | 27.1 | 27.1 | 27.1 |
| NCO amount of prepolymer (E) (mmol/g) | | 0.257 | 0.241 | 0.268 | 0.259 | 0.258 | 0.271 | 0.399 | 0.345 | 0.78 |
| Neutralizer (F) | Triethylamine | 3.99 | 3.99 | 3.99 | 3.99 | 3.99 | 3.99 | 3.99 | 3.99 | 3.99 |
| Amine (G) | Isophoronediamine | 3.68 | 2.69 | 1.99 | 0.97 | 0.49 | 0.00 | 3.20 | 2.77 | 6.25 |
| Catalyst | U-600 | 0.12 | 0.12 | 0.12 | 0.12 | 0.12 | 0.12 | 0.12 | 0.12 | 0.12 |
| Anti-foaming agent | KL-245 | 0.18 | 0.18 | 0.18 | 0.18 | 0.18 | 0.18 | 0.18 | 0.18 | 0.18 |
| Solvent | Acetone<br>Water | 75<br>350 | 75<br>350 | 75<br>350 | 75<br>350 | 75<br>350 | 75<br>350 | 75<br>350 | 75<br>350 | 75<br>350 |
| Total | - | 577.2 | 576.2 | 575.5 | 574.5 | 574.0 | 573.5 | 576.8 | 576.4 | 580.3 |
| Average hydroxyl value of polyol (A) (KOHmg/g) | | 90 | 90 | 90 | 90 | 90 | 90 | 82.5 | 82.5 | 82.5 |
| Content of polycarbonate polyol (B) (mass%) | | 50 | 50 | 50 | 50 | 50 | 50 | 50 | 50 | 50 |
| Cross-linking density (mmol/g) | | 0.16 | 0.16 | 0.16 | 0.16 | 0.16 | 0.16 | 0.16 | 0.16 | 0.16 |
| Total content of urea groups (mmol/g) | | 0.34 | 0.29 | 0.28 | 0.23 | 0.22 | 0.21 | 0.42 | 0.37 | 0.81 |
| Content of urea group derived from amine compound (mmol/g) | | 0.29 | 0.22 | 0.16 | 0.08 | 0.04 | 0.00 | 0.26 | 0.22 | 0.49 |
| Content of urea group derived from water (mmol/g) | | 0.04 | 0.07 | 0.12 | 0.16 | 0.18 | 0.21 | 0.17 | 0.15 | 0.32 |

(continued)

| | Example | | | | | | | | Comparative Example |
|---|---|---|---|---|---|---|---|---|---|
| | 24 | 25 | 26 | 27 | 28 | 29 | 30 | 31 | 9 |
| | PUD-32 | PUD-33 | PUD-34 | PUD-35 | PUD-36 | PUD-37 | PUD-38 | PUD-39 | PUD-40 |
| Proportion of amine compound-derived urea groups (mol%) | 86.9 | 74.9 | 57.0 | 33.5 | 18.5 | 0.0 | 60.2 | 60.2 | 60.1 |

Trimethylolpropane: Manufactured by Sigma-Aldrich
1,6-Hexanediol: Manufactured by BASF JAPAN
2,2-dimethylolpropionic acid: Manufactured by Tokyo Chemical Industry Co., Ltd.
Isophorone diisocyanate: Manufactured by Evonik Industries
Hexamethylene diisocyanate: Manufactured by Tokyo Chemical Industry Co., Ltd.
Acetone: Manufactured by KH Neochem Co., Ltd.
Triethylamine: Manufactured by Kishida Chemical Co., Ltd.
Isophoronediamine: Manufactured by Tokyo Chemical Industry Co., Ltd.
Neostann U-600: Manufactured by Nitto Kasei Co., Ltd.
KL-245: Manufactured by Evonik Industries
Water: Purified water

<Method for producing film for tensile property test>

14.0 parts of dipropylene glycol dimethyl ether was added to and mixed with 100 parts of each of aqueous polyurethane resin emulsion compositions PUD-1 to PUD-40 obtained in Examples 1 to 31 and Comparative Examples 1 to 9 to obtain main agents. The main agents were applied so that the dry film thickness was about 100 μm, and dried at 25°C for 2 days and at 80°C for 2 hours to prepare cured products. These cured products were used to evaluate physical properties. The results are shown in Tables 7 to 10.

[Evaluation Test 1]

[Tensile properties] The tensile properties (100% modulus, strength at break, and elongation at break) of the obtained cured products were measured according to JIS K7321.

Test device: Tensilon UTA-500 (manufactured by A&D Company, Limited)
Measurement conditions: 25°C × 50 %RH
Head speed: 200 mm/min
Dumbbell No. 4

[Softening temperature]

After obtaining test pieces from the obtained films using the dumbbell, 2 cm marked lines were marked on the test pieces, and the thicknesses of the marked lines at center portions were measured. A weight of a predetermined weight was attached to one grip portion of each test piece, the other grip portion was clamped with a double clip, the clip was hung in a dryer with the clip facing up. Thereafter, the temperature in the dryer was raised, the distance between the marked lines was observed, and the temperature when the distance between the marked lines reached 4 cm was read as a softening temperature.

Treatment device: Blow constant-temperature dryer DRK633DA (manufactured by Advantech Co., Ltd.)
Weight of weight: Thickness of marked line at center portion (μm) × 0.05 g
Dumbbell No. 2 (according to JIS K6251)
Temperature increase rate: 5°C/min

[Evaluation Criteria]

The physical property values of the 100% modulus, strength at break, and elongation at break were evaluated as A, B, C, and D (A: very good, B: good, C: fair, and D: poor). Furthermore, the comprehensive evaluation was A, B, and D (A: very good, B: good, and D: poor).

<100% modulus>

A: Less than 4.0 MPa

B: 4.0 MPa or more and less than 5.0 MPa

D: 5.0 MPa or more

<Strength at break>

A: 30 MPa or more

C: Less than 30 MPa

<Elongation at break>

A: 450 MPa or more

C: Less than 450 MPa

<Softening temperature>

A: 120°C or higher
B: Lower than 120°C and 90°C or higher
D: Lower than 90°C

<Comprehensive evaluation>

A: The evaluation of the physical property values includes only A.
B: The evaluation of the physical property values does not include D and contains at least one B or C.
D: The evaluation of the physical property values includes D.

[Table 7]

| | | Example 32 | Example 33 | Example 34 | Example 35 | Example 36 | Example 37 | Example 38 | Example 39 | Example 40 |
|---|---|---|---|---|---|---|---|---|---|---|
| | | PUD-1 | PUD-2 | PUD-3 | PUD-4 | PUD-5 | PUD-6 | PUD-7 | PUD-8 | PUD-9 |
| 100% modulus | MPa | 3.4 | 3.8 | 4.5 | 4.0 | 4.4 | 4.9 | 2.0 | 2.1 | 4.7 |
| | | A | A | B | A | B | B | A | A | B |
| Strength at break | MPa | 45.3 | 51.3 | 49.7 | 40.9 | 47.5 | 51.9 | 34.0 | 28.8 | 58.2 |
| | | A | A | A | A | A | A | A | C | A |
| Elongation at break | % | 440 | 450 | 370 | 510 | 470 | 450 | 520 | 430 | 410 |
| | | C | A | C | A | A | A | A | C | C |
| Softening point | °C | 125 | 180 | 205 | 96 | 148 | 181 | 99 | 173 | 149 |
| | | A | A | A | B | A | A | B | A | A |
| Comprehensive evaluation | | A | A | B | A | A | A | A | B | B |

| | | Example 41 | Example 42 | Example 43 | Example 44 | Example 45 | Example 46 | Example 47 | Example 48 | Example 49 |
|---|---|---|---|---|---|---|---|---|---|---|
| | | PUD-10 | PUD-11 | PUD-12 | PUD-13 | PUD-14 | PUD-15 | PUD-16 | PUD-17 | PUD-18 |
| 100% modulus | MPa | 4.7<br>B | 2.1<br>A | 2.7<br>A | 3.5<br>A | 3.8<br>A | 3.9<br>A | 4.6<br>B | 1.2999<br>A | 2.5<br>A |
| Strength at break | MPa | 54.9<br>A | 38.2<br>A | 42.2.<br>A | 35.5<br>A | 51.1<br>A | 45.8<br>A | 49.1<br>A | 20.3<br>C | 36.9<br>A |
| Elongation at break | % | 400<br>C | 530<br>A | 450<br>A | 370<br>C | 500<br>A | 490<br>A | 420<br>C | 580<br>A | 513<br>A |
| Softening point | °C | 192<br>A | 106<br>B | 175<br>A | 189<br>A | 111<br>B | 120<br>B | 198<br>A | 175<br>A | 176<br>A |
| Comprehensive evaluation | | B | A | A | A | A | A | B | A | A |

[Table 8]

| | | Comparative Example 10 | Comparative Example 11 | Comparative Example 12 | Comparative Example 13 | Comparative Example 14 | Comparative Example 15 |
|---|---|---|---|---|---|---|---|
| | | PUD-19 | PUD-20 | PUD-21 | PUD-22 | PUD-23 | PUD-24 |
| 100% modulus | MPa | 3.3<br>A | 5.1<br>D | 7.6<br>D | 5.2<br>D | 6.2<br>D | 3.2<br>D |
| Strength at break | MPa | 48.1<br>A | 57.6<br>A | 74.4<br>A | 45.7<br>A | 52.8<br>A | 39.9<br>A |
| Elongation at break | % | 530<br>A | 450<br>A | 440<br>C | 460<br>A | 430<br>C | 580<br>A |
| Softening point | °C | 82<br>D | 118<br>B | 141<br>A | 113<br>B | 165<br>A | 89<br>D |
| Comprehensive evaluation | | D | D | D | D | D | D |

[Table 9]

| | | Example 50 | Example 51 | Example 33 | Example 52 | Example 53 | Example 54 | Comparative Example 16 | Comparative Example 17 |
|---|---|---|---|---|---|---|---|---|---|
| | | PUD-25 | PUD-26 | PUD-2 | PUD-27 | PUD-28 | PUD-29 | PUD-30 | PUD-31 |
| 100% modulus | MPa | 3.4<br>A | 3.8<br>A | 3.8<br>A | 4.1<br>B | 4.1<br>B | 5.0<br>B | 3.0<br>A | 6.1<br>D |
| Strength at break | MPa | 51.3<br>A | 55.9<br>A | 51.3<br>A | 56.4<br>A | 56.4<br>A | 58.4<br>A | 38.5<br>A | 54.0<br>A |
| Elongation at break | % | 502<br>A | 453<br>A | 450<br>A | 408<br>C | 408<br>C | 350<br>C | 545<br>A | 350<br>B |
| Softening point | °C | 92<br>B | 134<br>A | 180<br>A | 193<br>A | 203<br>A | 212<br>A | 80<br>D | 211<br>A |
| Comprehensive evaluation | | A | A | A | B | B | B | D | D |

[Table 10]

| | | Example 55 | Example 56 | Example 57 | Example 58 | Example 59 | Example 60 | Example 61 | Example 62 | Comparative Example 18 |
|---|---|---|---|---|---|---|---|---|---|---|
| | | PUD-32 | PUD-33 | PUD-34 | PUD-35 | PUD-36 | PUD-37 | PUD-38 | PUD-39 | PUD-40 |
| 100% modulus | MPa | 4.7 | 4.1 | 4.0 | 3.7 | 3.4 | 2.7 | 2.5 | 2.6 | 7.5 |
| | | B | B | A | A | A | A | A | A | D |
| Strength at break | MPa | 45.0 | 45.3 | 54.9 | 57.6 | 55.3 | 47.1 | 28.7 | 39.2 | 10.2 |
| | | A | A | A | A | A | A | C | A | C |
| Elongation at break | % | 438 | 410 | 445 | 442 | 422 | 468 | 518 | 495 | 290 |
| | | C | C | A | C | C | A | A | A | C |
| Softening point | °C | 115 | 159 | 176 | 169 | 183 | 155 | 111 | 136 | 65 |
| | | B | A | A | A | A | A | B | A | D |
| Comprehensive evaluation | | B | B | A | A | A | A | B | A | D |

[Production 2-1 of polycarbonate polyol]

31.3 g of trimethylolpropane, 413.8 g of 1,6-hexanediol, 454.9 g of diethyl carbonate, and 0.045 g of lithium acetylacetonate were mixed with each other in a 1 L two-necked glass reactor equipped with a stirrer, a thermometer, a heating device, and a cooler, and were reacted with each other at 100°C to 150°C for 8 hours while removing low-boiling point components under normal pressure. Furthermore, the reaction temperature was set to 150°C, the pressure inside the flask was reduced to 1 kPa, and the reaction was further carried out for 8 hours to obtain a polycarbonate polyol (PCP-1F).

[Production 2-2 of polycarbonate polyol]

74.4 g of trimethylolpropane, 393.2 g of 1,6-hexanediol, 432.4 g of diethyl carbonate, and 0.045 g of lithium acetylacetonate were mixed with each other in a 1 L two-necked glass reactor equipped with a stirrer, a thermometer, a heating device, and a cooler, and were reacted with each other at 100°C to 150°C for 8 hours while removing low-boiling point components under normal pressure. Furthermore, the reaction temperature was set to 150°C, the pressure inside the flask was reduced to 1 kPa, and the reaction was further carried out for 8 hours to obtain a polycarbonate polyol (PCP-2B).

Productions 2-1 to 2-2 of polycarbonate polyol are summarized in Table 11.

[Table 11]

| | PCP-1F | PCP-2B |
|---|---|---|
| 1,6-Hexanediol | 413.8 | 393.2 |
| Trimethylolpropane | 31.3 | 74.4 |
| Diethyl carbonate | 454.9 | 432.4 |
| Lithium acetylacetonate | 0.045 | 0.045 |
| Total | 900.0 | 900.0 |
| Number average molecular weight (g/mol) | 1850.0 | 1060 |
| OHv (mgKOH/g) | 72.6 | 163 |
| Property at 25°C | Solid | Solid |
| Deemed average number of functional groups | 2.39 | 3.08 |
| 1,6-Hexanediol: Manufactured by BASF JAPAN<br>Trimethylolpropane: Manufactured by Sigma-Aldrich<br>Diethyl carbonate: Manufactured by Sigma-Aldrich<br>Lithium acetylacetonate: Manufactured by Sigma-Aldrich | | |

(Example 63: Production 2-1 of aqueous polyurethane resin emulsion)

51.1 g of N-980N (manufactured by Tosoh Corporation: number average molecular weight of 2,000; hydroxyl value of 56.11 mgKOH/g; 1,6-hexanediol-based polycarbonate diol), 3.07 g of 1,6-hexanediol, 51.9 g of PCP-1F, 75 g of acetone, 5.43 g of 2,2-dimethylolpropanoic acid, and 34.6 g of isophorone diisocyanate were added to a reactor having a capacity of 1 L (hereinafter referred to as a reactive group A) equipped with a stirrer, a thermometer, a nitrogen seal tube, and a cooler, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.356 mmol/g. Subsequently, 4.10 g of triethylamine was added to neutralize carboxyl groups, and then 320 g of water was added while stirring for emulsification. After emulsification, 0.18 g of KL-245 was added thereto, amine water (a mixture of 30 g of water, 2.04 g of isophoronediamine, and 1.83 g of monoethanolamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-41).

(Example 64: Production 2-2 of aqueous polyurethane resin emulsion)

26.6 g of N-980N, 79.8 g of PCP-1F, 75 g of acetone, 5.29 g of 2,2-dimethylolpropanoic acid, and 30.5 g of isophorone diisocyanate were added to a reactor A, heated to 60°C, and stirred at the same temperature for 30 minutes,

and then 0.12 g of U-600 was added thereto to cause a reaction for 5 hours. The content of unreacted isocyanate groups at the end of urethanization with respect to the above-described added amount was 0.349 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water, 1.99 g of isophoronediamine, and 1.78 g of monoethanolamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-42).

(Example 65: Production 2-3 of aqueous polyurethane resin emulsion)

81.1 g of N-980N, 4.33 g of 1,6-hexanediol, 15.1 g of PCP-2A, 75 g of acetone, 5.29 g of 2,2-dimethylolpropanoic acid, and 36.5 g of isophorone diisocyanate were added to a reactor A, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.371 mmol/g. Subsequently, 3.99 g of triethylamine was added to neutralize carboxyl groups, and then 320 g of water was added while stirring for emulsification. After emulsification, 0.18 g of KL-245 was added thereto, amine water (a mixture of 30 g of water, 1.99 g of isophoronediamine, and 1.43 g of monoethanolamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-43).

(Comparative Example 19: Production 2-4 of aqueous polyurethane resin emulsion)

103.1 g of N-980N, 3.00 g of trimethylolpropane, 75 g of acetone, 5.43 g of 2,2-dimethylolpropanoic acid, and 34.6 g of isophorone diisocyanate were added to a reactor A, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.361 mmol/g. Subsequently, 4.10 g of triethylamine was added to neutralize carboxyl groups, and then 320 g of water was added while stirring for emulsification. After emulsification, 0.18 g of KL-245 was added thereto, amine water (a mixture of 30 g of water, 2.04 g of isophoronediamine, and 1.83 g of monoethanolamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-44).

(Comparative Example 20: Production 2-5 of aqueous polyurethane resin emulsion)

102.0 g of N-980N, 4.02 g of 1,6-hexanediol, 75 g of acetone, 5.43 g of 2,2-dimethylolpropanoic acid, and 34.6 g of isophorone diisocyanate were added to a reactor A, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.356 mmol/g. Subsequently, 4.10 g of triethylamine was added to neutralize carboxyl groups, and then 320 g of water was added while stirring for emulsification. After emulsification, 0.18 g of KL-245 was added thereto, amine water (a mixture of 30 g of water, 2.04 g of isophoronediamine, and 1.83 g of monoethanolamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-45).

(Comparative Example 21: Production 2-6 of aqueous polyurethane resin emulsion)

97.6 g of N-980N, 3.85 g of 1,6-hexanediol, 75 g of acetone, 5.43 g of 2,2-dimethylolpropanoic acid, and 37.1 g of isophorone diisocyanate were added to a reactor A, heated to 60°C, and stirred at the same temperature for 30 minutes, and then 0.12 g of U-600 was added thereto to cause a reaction for 5 hours. The content of unreacted isocyanate groups at the end of urethanization with respect to the above-described added amount was 0.420 mmol/g. Subsequently, 4.10 g of

triethylamine was added to neutralize carboxyl groups, and then 320 g of water was added while stirring for emulsification. After emulsification, 0.18 g of KL-245 was added thereto, amine water (a mixture of 30 g of water, 4.09 g of isophoronediamine, and 1.83 g of monoethanolamine) was added thereto within 30 minutes, and an amine chain extension reaction was performed at 40°C for 12 hours. Stirring was stopped when the presence of the isocyanate groups was no longer confirmed by FT-IR. Thereafter, the reaction solution was transferred to a 2 L eggplant flask and distilled under reduced pressure to remove 75 g of acetone and 50 g of water to obtain an aqueous polyurethane resin emulsion composition (PUD-46).

Examples 63 to 65 (PUD-41 to 43) and Comparative Examples 19 to 21 (PUD-44 to 46) are summarized in Table 12.

[Table 12]

| | | Example | | | Comparative Example | | |
|---|---|---|---|---|---|---|---|
| | | 63 | 64 | 65 | 19 | 20 | 21 |
| | | PUD-41 | PUD-42 | PUD-43 | PUD-44 | PUD-45 | PUD-46 |
| Polyol (B') | N-980N<br>Trimethylolpropane | 51.1 | 26.6 | 81.3 | 103.1<br>3.00 | 102.0 | 97.6 |
| (a-1) | 1,6-Hexanediol | 3.07 | | 4.33 | | 4.02 | 3.85 |
| Polycarbonate polyol (B) | PCP-1<br>PCP-2 | 51.9 | 79.8 | 15.1 | | | |
| Hydrophilic agent (C) | 2,2-Dimethylolpropanoic acid | 5.43 | 5.29 | 5.29 | 5.43 | 5.43 | 5.43 |
| Isocyanate (D) | Isophorone diisocyanate | 34.6 | 30.5 | 36.5 | 34.6 | 34.6 | 37.1 |
| NCO amount of prepolymer (E) (mmol/g) | | 0.356 | 0.349 | 0.371 | 0.361 | 0.356 | 0.420 |
| Neutralizer (F) | Triethylamine | 4.10 | 3.99 | 3.99 | 4.10 | 4.10 | 4.10 |
| Amine (G) | Isophoronediamine | 2.04 | 1.99 | 1.99 | 2.04 | 2.04 | 4.09 |
| | Monoethanolamine | 1.83 | 1.78 | 1.43 | 1.83 | 1.83 | 1.83 |
| Catalyst | U-600 | 0.12 | 0.12 | 0.12 | 0.12 | 0.12 | 0.12 |
| Anti-foaming agent | KL-245 | 0.18 | 0.18 | 0.18 | 0.18 | 0.18 | 0.18 |
| Solvent | Acetone<br>Water | 75<br>350 | 75<br>346 | 75<br>346 | 75<br>350 | 75<br>350 | 75<br>350 |
| Total | - | 579.7 | 571.5 | 571.5 | 579.7 | 579.7 | 579.7 |
| Average hydroxyl value of polyol (A) (KOHmg/g) | | 90.0 | 78.2 | 110.0 | 90.0 | 90.0 | 90.0 |
| Content of polycarbonate polyol (B) (mass%) | | 48.7 | 75.0 | 15.0 | 0.0 | 0.0 | 0.0 |
| Cross-linking density (mmol/g) | | 0.15 | 0.27 | 0.10 | 0.15 | 0 | 0 |
| Total content of urea groups (mmol/g) | | 0.44 | 0.44 | 0.44 | 0.45 | 0.44 | 0.57 |
| Content of urea group derived from amine compound (mmol/g) | | 0.36 | 0.36 | 0.32 | 0.36 | 0.36 | 0.52 |
| Content of urea group derived from water (mmol/g) | | 0.08 | 0.08 | 0.12 | 0.09 | 0.08 | 0.05 |

(continued)

| | Example | | | Comparative Example | | |
|---|---|---|---|---|---|---|
| | 63 | 64 | 65 | 19 | 20 | 21 |
| | PUD-41 | PUD-42 | PUD-43 | PUD-44 | PUD-45 | PUD-46 |
| Proportion of amine compound-derived urea groups (mol%) | 81.4 | 81.9 | 73.3 | 80.7 | 81.4 | 91.8 |
| Trimethylolpropane: Manufactured by Sigma-Aldrich<br>1,6-Hexanediol: Manufactured by BASF JAPAN<br>2,2-dimethylolpropionic acid: Manufactured by Tokyo Chemical Industry Co., Ltd.<br>Isophorone diisocyanate: Manufactured by Evonik Industries<br>Acetone: Manufactured by KH Neochem Co., Ltd.<br>Triethylamine: Manufactured by Kishida Chemical Co., Ltd.<br>Isophoronediamine: Manufactured by Tokyo Chemical Industry Co., Ltd.<br>Monoethanolamine: Manufactured by FUJIFILM Wako Chemical Corporation<br>Neostann U-600: Manufactured by Nitto Kasei Co., Ltd.<br>KL-245: Manufactured by Evonik Industries<br>Water: Municipal water | | | | | | |

Furthermore, PUD-41 to PUD-46 which were polyol components obtained in Examples 63 to 65 and Comparative Examples 19 to 21, a curing agent (X) which was a polyisocyanate components, and a film-forming aid were added to a 200 mL glass bottle in the formulation amounts shown in Table 13 and mixed with each other to obtain formulation liquids. The formulation liquids were applied so that the dry film thickness was about 100 μm, and dried at 25°C for 1 day and at 80°C for 2 hours to prepare cured products. These cured products were used to evaluate physical properties. The results are shown in Table 13. The incorporation units in the table are grams.

Dipropylene glycol dimethyl ether: Manufactured by FUJIFILM Wako Chemical Corporation
Aquanate 200: Manufactured by Tosoh Corporation (nonionic water-dispersible polyisocyanate, NCO content=11.9%)

[Evaluation Test 2-1]

[Tensile properties] The tensile properties (100% modulus, strength at break, and elongation at break) of the obtained cured products were measured according to JIS K7321.

Test device: Tensilon UTA-500 (manufactured by A&D Company, Limited)
Measurement conditions: 25°C × 50 %RH
Head speed: 200 mm/min
Dumbbell No. 4

[Softening temperature]

After obtaining test pieces from the obtained films using the dumbbell, 2 cm marked lines were marked on the test pieces, and the thicknesses of the marked lines at center portions were measured. A weight of a predetermined weight was attached to one grip portion of each test piece, the other grip portion was clamped with a double clip, the clip was hung in a dryer with the clip facing up. Thereafter, the temperature in the dryer was raised, the distance between the marked lines was observed, and the temperature when the distance between the marked lines reached 4 cm was read as a softening temperature.

Treatment device: Blow constant-temperature dryer DRK633DA (manufactured by Advantech Co., Ltd.)
Weight of weight: Thickness of marked line at center portion (μm) × 0.05 g
Dumbbell No. 2 (according to JIS K6251)
Temperature increase rate: 5°C/min

[Evaluation Criteria]

The physical property values of the 100% modulus, strength at break, and elongation at break were evaluated as A, B, C, and D (A: very good, B: good, C: fair, and D: poor). Furthermore, the comprehensive evaluation was A, B, and D (A: very good, B: good, and D: poor).

<100% modulus>

A: Less than 5.0 MPa
B: 5.0 MPa or more and less than 6.5 MPa
D: 6.5 MPa or more

<Strength at break>

A: 30 MPa or more

C: Less than 30 MPa

<Elongation at break>

A: 250 MPa or more
C: Less than 250 MPa

<Softening temperature>

A: 230°C or higher
B: Lower than 230°C and 210°C or higher
D: Lower than 210°C

<Comprehensive evaluation>

A: The evaluation of the physical property values includes only A.
B: The evaluation of the physical property values does not include D and contains at least one B or C.
D: The evaluation of the physical property values includes D.

[Table 13]

| | Example | | | | | Comparative Example | | | | | | | | | | | |
|---|---|---|---|---|---|---|---|---|---|---|---|---|---|---|---|---|---|
| | 66 | 67 | 68 | 69 | 70 | 22 | 23 | 24 | 25 | 26 | 27 | 28 | 29 | 30 | 31 | 32 | 33 |
| Polyol component | | | | | | | | | | | | | | | | | |
| PUD-41 | 100 | 100 | | | | 100 | | | | | | | | | | | |
| PUD-42 | | | 100 | 100 | | | 100 | | | | | | | | | | |
| PUD-43 | | | | | 100 | | | 100 | | | | | | | | | |
| PUD-44 | | | | | | | | | 100 | 100 | 100 | | | | | | |
| PUD-45 | | | | | | | | | | | | 100 | 100 | 100 | | | |
| PUD-46 | | | | | | | | | | | | | | | 100 | 100 | 100 |
| Polyisocyanate component Aquanate 200 | 5 | 10 | 5 | 10 | 5 | 0 | 0 | 0 | 0 | 5 | 10 | 0 | 5 | 10 | 0 | 5 | 10 |
| Film-forming aid (Z) Dipropylene glycol dimethyl ether | 14 | 14 | 14 | 14 | 14 | 14 | 14 | 14 | 14 | 14 | 14 | 14 | 14 | 14 | 14 | 14 | 14 |
| 100% modulus MPa | 5.9<br>B | 6.4<br>B | 4.7<br>A | 4.9<br>A | 6.3<br>B | 5.2<br>B | 3.6<br>A | 5.3<br>B | 5.1<br>B | 6.7<br>D | 7.1<br>D | 3.7<br>A | 4.4<br>A | 4.1<br>A | 7.0<br>D | 6.8<br>D | 6.8<br>D |
| Strength at break MPa | 45.4<br>A | 35.4<br>A | 39.3<br>A | 29.0<br>C | 46.1<br>A | 42.2<br>A | 29.1<br>C | 31.9<br>A | 35.0<br>A | 42.5<br>A | 32.0<br>A | 24.4<br>C | 29.0<br>C | 37.7<br>A | 52.1<br>A | 51.1<br>A | 56.6<br>A |
| Elongation at break % | 258<br>A | 208<br>C | 340<br>A | 290<br>A | 390<br>A | 425<br>A | 470<br>A | 467<br>A | 433<br>A | 308<br>A | 200<br>C | 492<br>A | 400<br>A | 400<br>A | 380<br>A | 408<br>A | 367<br>A |
| Softening point °C | 234<br>A | 257<br>A | 231<br>A | 246<br>A | 210<br>B | 109<br>D | 115<br>D | 86<br>D | 102<br>D | 213<br>B | 223<br>B | 78<br>D | 96<br>D | 185<br>D | 114<br>D | 114<br>D | 176<br>D |
| Comprehensive evaluation | B | B | A | A | B | D | D | D | D | D | D | D | D | D | D | D | D |

Aquanate 200: Manufactured by Tosoh Corporation (nonionic water-dispersible polyisocyanate, NCO content=11.9%)
Dipropylene glycol dimethyl ether: Manufactured by FUJIFILM Wako Chemical Corporation

## Claims

1. A polyurethane resin composition comprising:

   a reaction product of an isocyanate group-terminated urethane prepolymer (E) and a chain extender (G); and a neutralizer (F),
   wherein the isocyanate group-terminated urethane prepolymer (E) comprises a reaction product of
   a polyol (A) comprising a polycarbonate polyol (B) having an average number of hydroxyl functional groups exceeding 2,
   an organic acid (C), and
   a polyisocyanate (D),
   wherein a total content of urea groups in the polyurethane resin composition is, as determined according to the description, 0.01 to 0.80 mmol/g with respect to a sum of a mass of the isocyanate group-terminated urethane prepolymer (E) and a mass of the chain extender (G), and
   wherein the polycarbonate polyol (B) has a deemed average number of functional groups of 2.0 to 3.90, as determined according to the description.

2. The polyurethane resin composition according to claim 1, wherein the chain extender (G) is

   one or more selected from the group consisting of
   an amine compound comprising one or more primary or secondary amino groups, and
   water.

3. The polyurethane resin composition according to claim 1 or 2,

   wherein the chain extender (G) comprises an amine compound comprising one or more primary or secondary amino groups, and
   wherein a content of urea groups derived from the amine compound in the polyurethane resin composition is, as determined according to the description, greater than 0 mmol/g and less than or equal to 0.480 mmol/g with respect to the sum of the mass of the isocyanate group-terminated urethane prepolymer (E) and the mass of the chain extender (G).

4. The polyurethane resin composition according to any one of claims 1 to 3,

   wherein the chain extender (G) comprises an amine compound comprising one or more primary or secondary amino groups, and
   wherein the content of the urea groups derived from the amine compound in the polyurethane resin composition is greater than 0 mol% and less than or equal to 95 mol% with respect to the total content of the urea groups.

5. The polyurethane resin composition according to any one of claims 1 to 4,

   wherein the chain extender (G) comprises water, and
   wherein a content of urea groups derived from the water in the polyurethane resin composition is, as determined according to the description, greater than 0 mmol/g and less than or equal to 0.80 mmol/g with respect to the sum of the mass of the isocyanate group-terminated urethane prepolymer (E) and the mass of the chain extender (G).

6. The polyurethane resin composition according to any one of claims 1 to 5,
   wherein the content of the polycarbonate polyol (B) is 5.0 mass% or more with respect to the total content of the polyol (A).

7. The polyurethane resin composition according to any one of claims 1 to 6,
   wherein the polyol (A) has an average hydroxyl value of 30 to 150 mg KOH/g, as determined according to JIS K1557-1 and the description.

8. The polyurethane resin composition according to any one of claims 1 to 7,

   wherein the polycarbonate polyol (B) comprises
   a transesterification product of a diol (b-1), a polyhydric alcohol (b-2), and a carbonic acid ester (b-3) or

a transesterification product of a diol (b-1), a polyhydric alcohol (b-2), and a polycarbonate polyol (b-4).

**9.** The polyurethane resin composition according to any one of claims 1 to 8,
wherein the polycarbonate polyol (B) has a hydroxyl value of 40 to 500 mgKOH/g, as determined according to the description.

**10.** The polyurethane resin composition according to any one of claims 1 to 9,
wherein the polycarbonate polyol (B) has a number average molecular weight of 400 to 4,000 g/mol, as determined according to the description.

**11.** The polyurethane resin composition according to any one of claims 1 to 10,
wherein the organic acid (C) is a dimethylol fatty acid.

**12.** The polyurethane resin composition according to any one of claims 1 to 11,
wherein the neutralizer (F) is a basic neutralizer.

**13.** The polyurethane resin composition according to any one of claims 1 to 12,
wherein the polyol (A) comprises a diol (a-1).

**14.** The polyurethane resin composition according to any one of claims 1 to 13, which is a one-pack type.

**15.** The polyurethane resin composition according to any one of claims 1 to 13, further comprising:
a curing agent (X).

**16.** The polyurethane resin composition according to claim 15, which is a two-pack type.

**17.** A cured product of a polyurethane resin composition comprising a reaction product of an isocyanate group-terminated urethane prepolymer (E) and a chain extender (G),

wherein the isocyanate group-terminated urethane prepolymer (E) comprises a reaction product of
a polyol (A) comprising a polycarbonate polyol (B) having an average number of hydroxyl functional groups exceeding 2,
an organic acid (C), and
a polyisocyanate (D),
wherein a total content of urea groups in the polyurethane resin composition is, as determined according to the description, 0.01 to 0.80 mmol/g with respect to a sum of a mass of the isocyanate group-terminated urethane prepolymer (E) and a mass of the chain extender (G), and
wherein the polycarbonate polyol (B) has a deemed average number of functional groups of 2.0 to 3.90, as determined according to the description.

**18.** Artificial leather or synthetic leather comprising:
the cured product of the polyurethane resin composition according to any one of claims 1 to 17.

**19.** A surface treatment agent for leather comprising:
the cured product of the polyurethane resin composition according to any one of claims 1 to 17.

## Patentansprüche

**1.** Polyurethanharzzusammensetzung, umfassend:

ein Reaktionsprodukt aus einem Isocyanatgruppen-terminierten Urethan-Präpolymer (E) und einem Kettenverlängerer (G); und
einen Neutralisator (F),
wobei das Isocyanatgruppen-terminierte Urethan-Präpolymer (E) ein Reaktionsprodukt aus
einem Polyol (A) umfassend ein Polycarbonatpolyol (B) mit einer durchschnittlichen Anzahl von Hydroxylfunktionellengruppen von mehr als 2,
einer organischen Säure (C), und

einem Polyisocyanat (D) ist,
wobei ein Gesamtgehalt an Harnstoffgruppen in der Polyurethanharzzusammensetzung, wie gemäß der Beschreibung bestimmt, 0,01 bis 0,80 mmol/g in Bezug auf eine Summe aus einer Masse des Isocyanatgruppen-terminierten Urethan-Präpolymers (E) und einer Masse des Kettenverlängerers (G) ist, und
wobei das Polycarbonatpolyol (B) eine angenommene durchschnittliche Anzahl an funktionellen Gruppen von 2,0 bis 3,90 hat, wie gemäß der Beschreibung bestimmt.

**2.** Polyurethanharzzusammensetzung nach Anspruch 1, wobei der Kettenverlängerer (G)

eines oder mehrere ausgewählt aus der Gruppe bestehend aus
einer Aminverbindung umfassend eine oder mehrere primäre oder sekundäre Aminogruppen, und
Wasser ist.

**3.** Polyurethanharzzusammensetzung nach Anspruch 1 oder 2,

wobei der Kettenverlängerer (G) eine Aminverbindung umfasst, die eine oder mehrere primäre oder sekundäre Aminogruppen umfasst, und
wobei ein Gehalt an Harnstoffgruppen, die von der Aminverbindung in der Polyurethanharzzusammensetzung abgeleitet sind, wie gemäß der Beschreibung bestimmt, größer als 0 mmol/g und kleiner als oder gleich zu 0,480 mmol/g in Bezug auf die Summe der Masse des Isocyanatgruppen-terminierten Urethan-Präpolymers (E) und der Masse des Kettenverlängerers (G) ist.

**4.** Polyurethanharzzusammensetzung nach einem der Ansprüche 1 bis 3,

wobei der Kettenverlängerer (G) eine Aminverbindung umfasst, die eine oder mehrere primäre oder sekundäre Aminogruppen umfasst, und
wobei der Gehalt an Harnstoffgruppen, die von der Aminverbindung in der Polyurethanharzzusammensetzung abgeleitet sind, größer als 0 Mol-% und kleiner als oder gleich zu 95 Mol-% in Bezug auf den Gesamtgehalt an Harnstoffgruppen ist.

**5.** Polyurethanharzzusammensetzung nach einem der Ansprüche 1 bis 4,

wobei der Kettenverlängerer (G) Wasser umfasst, und
wobei ein Gehalt an Harnstoffgruppen, die von dem Wasser in der Polyurethanharzzusammensetzung abgeleitet sind, wie gemäß der Beschreibung bestimmt, größer als 0 mmol/g und kleiner als oder gleich zu 0,80 mmol/g in Bezug auf die Summe der Masse des Isocyanatgruppen-terminierten Urethan-Präpolymers (E) und der Masse des Kettenverlängerers (G) ist.

**6.** Polyurethanharzzusammensetzung nach einem der Ansprüche 1 bis 5,
wobei der Gehalt an Polycarbonatpolyol (B) 5,0 Masse-% oder mehr in Bezug auf den Gesamtgehalt an Polyol (A) ist.

**7.** Polyurethanharzzusammensetzung nach einem der Ansprüche 1 bis 6,
wobei das Polyol (A) einen durchschnittlichen Hydroxylwert von 30 bis 150 mg KOH/g hat, wie gemäß JIS K1557-1 und der Beschreibung bestimmt.

**8.** Polyurethanharzzusammensetzung nach einem der Ansprüche 1 bis 7,

wobei das Polycarbonatpolyol (B)
ein Umesterungsprodukt eines Diols (b-1), eines mehrwertigen Alkohols (b-2) und eines Carbonsäureesters (b-3) oder
ein Umesterungsprodukt eines Diols (b-1), eines mehrwertigen Alkohols (b-2) und eines Polycarbonatpolyols (b-4) umfasst.

**9.** Polyurethanharzzusammensetzung nach einem der Ansprüche 1 bis 8,
wobei das Polycarbonatpolyol (B) einen Hydroxylwert von 40 bis 500 mgKOH/g hat, wie gemäß der Beschreibung bestimmt.

**10.** Polyurethanharzzusammensetzung nach einem der Ansprüche 1 bis 9,

wobei das Polycarbonatpolyol (B) ein zahlenmittleres Molekulargewicht von 400 bis 4.000 g/mol hat, wie gemäß der Beschreibung bestimmt.

**11.** Polyurethanharzzusammensetzung nach einem der Ansprüche 1 bis 10, wobei die organische Säure (C) eine Dimethylolfettsäure ist.

**12.** Polyurethanharzzusammensetzung nach einem der Ansprüche 1 bis 11, wobei der Neutralisator (F) ein basischer Neutralisator ist.

**13.** Polyurethanharzzusammensetzung nach einem der Ansprüche 1 bis 12, wobei das Polyol (A) ein Diol (a-1) umfasst.

**14.** Polyurethanharzzusammensetzung nach einem der Ansprüche 1 bis 13, die ein Einkomponententyp ist.

**15.** Polyurethanharzzusammensetzung nach einem der Ansprüche 1 bis 13, ferner umfassend: ein Härtungsmittel (X).

**16.** Polyurethanharzzusammensetzung nach Anspruch 15, die ein Zweikomponententyp ist.

**17.** Gehärtetes Produkt einer Polyurethanharzzusammensetzung, umfassend ein Reaktionsprodukt eines Isocyanatgruppen-terminierten Urethan-Präpolymers (E) und eines Kettenverlängerers (G),

wobei das Isocyanatgruppen-terminierte Urethan-Präpolymer (E) ein Reaktionsprodukt aus
einem Polyol (A) umfassend ein Polycarbonatpolyol (B) mit einer durchschnittlichen Anzahl von Hydroxylfunktionellengruppen von mehr als 2,
einer organischen Säure (C), und
einem Polyisocyanat (D) ist,
wobei ein Gesamtgehalt an Harnstoffgruppen in der Polyurethanharzzusammensetzung, wie gemäß der Beschreibung bestimmt, 0,01 bis 0,80 mmol/g in Bezug auf eine Summe aus einer Masse des Isocyanatgruppen-terminierten Urethan-Präpolymers (E) und einer Masse des Kettenverlängerers (G) ist, und
wobei das Polycarbonatpolyol (B) eine angenommene durchschnittliche Anzahl an funktionellen Gruppen von 2,0 bis 3,90 hat, wie gemäß der Beschreibung bestimmt.

**18.** Kunstleder oder synthetisches Leder, umfassend: das gehärtete Produkt der Polyurethanharzzusammensetzung nach einem der Ansprüche 1 bis 17.

**19.** Oberflächenbehandlungsmittel für Leder, umfassend: das gehärtete Produkt der Polyurethanharzzusammensetzung nach einem der Ansprüche 1 bis 17.

## Revendications

**1.** Composition de résine polyuréthane comprenant :

un produit de réaction d’un prépolymère d’uréthane terminé par un groupe isocyanate (E) et d’un allongeur de chaîne (G) ; et
un neutralisant (F),
dans laquelle le prépolymère d’uréthane terminé par un groupe isocyanate (E) comprend un produit de réaction de
un polyol (A) comprenant un polycarbonate polyol (B) ayant un nombre moyen de groupes fonctionnels hydroxyle supérieur à 2,
un acide organique (C), et
un polyisocyanate (D),
dans laquelle une teneur totale en groupes urée dans la composition de résine polyuréthane, telle que déterminée selon la description, est de 0,01 à 0,80 mmol/g par rapport à la somme de la masse du prépolymère d’uréthane terminé par un groupe isocyanate (E) et de la masse de l’allongeur de chaîne (G), et
dans laquelle le polycarbonate polyol (B) a un nombre moyen estimé de groupes fonctionnels de 2,0 à 3,90, tel que déterminé selon la description.

**2.** Composition de résine polyuréthane selon la revendication **1,** dans laquelle l'allongeur de chaîne (G) est

un ou plusieurs choisis dans le groupe constitué de
un composé aminé comprenant un ou plusieurs groupes amino primaires ou secondaires, et
l'eau.

**3.** Composition de résine polyuréthane selon la revendication 1 ou 2,

dans laquelle l'allongeur de chaîne (G) comprend un composé aminé comprenant un ou plusieurs groupes amino primaires ou secondaires, et
dans laquelle une teneur en groupes urée dérivés du composé aminé dans la composition de résine polyuréthane, telle que déterminée selon la description, est supérieure à 0 mmol/g et inférieure ou égale à 0,480 mmol/g par rapport à la somme de la masse du prépolymère d'uréthane terminé par un groupe isocyanate (E) et de la masse de l'allongeur de chaîne (G).

**4.** Composition résine polyuréthane selon l'une quelconque des revendications 1 à 3,

dans laquelle l'allongeur de chaîne (G) comprend un composé aminé comprenant un ou plusieurs groupes amino primaires ou secondaires, et
dans laquelle la teneur en groupes urée dérivés du composé aminé dans la composition de résine polyuréthane est supérieure à 0 % en moles et inférieure ou égale à 95 % en moles par rapport à la teneur totale en groupes urée.

**5.** Composition résine polyuréthane selon l'une quelconque des revendications 1 à 4,

dans laquelle l'allongeur de chaîne (G) comprend de l'eau, et
dans laquelle une teneur en groupes urée dérivés de l'eau dans la composition de résine polyuréthane, telle que déterminée selon la description, est supérieure à 0 mmol/g et inférieure ou égale à 0,80 mmol/g par rapport à la somme de la masse du prépolymère d'uréthane terminé par un groupe isocyanate (E) et de la masse de l'allongeur de chaîne (G).

**6.** Composition résine polyuréthane selon l'une quelconque des revendications 1 à 5,
dans laquelle la teneur en polycarbonate polyol (B) est de 5,0 % en masse ou plus par rapport à la teneur totale en polyol (A).

**7.** Composition résine polyuréthane selon l'une quelconque des revendications 1 à 6,
dans laquelle le polyol (A) a un indice d'hydroxyle moyen de 30 à 150 mg KOH/g, tel que déterminé selon la norme JIS K1557-1 et la description.

**8.** Composition résine polyuréthane selon l'une quelconque des revendications 1 à 7,

dans laquelle le polycarbonate polyol (B) comprend
un produit de transestérification d'un diol (b-1), d'un alcool polyhydrique (b-2) et d'un ester d'acide carbonique (b-3) ou
un produit de transestérification d'un diol (b-1), d'un alcool polyhydrique (b-2) et d'un polycarbonate polyol (b-4).

**9.** Composition résine polyuréthane selon l'une quelconque des revendications 1 à 8,
dans laquelle le polycarbonate polyol (B) a un indice d'hydroxyle de 40 à 500 mgKOH/g, tel que déterminé selon la description.

**10.** Composition résine polyuréthane selon l'une quelconque des revendications 1 à 9,
dans laquelle le polycarbonate polyol (B) a un poids moléculaire moyen en nombre de 400 à 4 000 g/mol, tel que déterminé selon la description.

**11.** Composition résine polyuréthane selon l'une quelconque des revendications 1 à 10,
dans laquelle l'acide organique (C) est un acide gras diméthylolique.

**12.** Composition résine polyuréthane selon l'une quelconque des revendications 1 à 11,

dans laquelle le neutralisant (F) est un neutralisant basique.

**13.** Composition résine polyuréthane selon l'une quelconque des revendications 1 à 12, dans laquelle le polyol (A) comprend un diol (a-1).

**14.** Composition de résine polyuréthane selon l'une quelconque des revendications 1 à 13, qui est du type monocomposant.

**15.** Composition résine polyuréthane selon l'une quelconque des revendications 1 à 13, comprenant en outre : un agent de durcissement (X).

**16.** Composition de résine polyuréthane selon la revendication 15, qui est du type à deux composants.

**17.** Produit durci d'une composition de résine polyuréthane comprenant un produit de réaction d'un prépolymère d'uréthane terminé par un groupe isocyanate (E) et d'un allongeur de chaîne (G),

dans laquelle le prépolymère d'uréthane terminé par un groupe isocyanate (E) comprend un produit de réaction de
un polyol (A) comprenant un polycarbonate polyol (B) ayant un nombre moyen de groupes fonctionnels hydroxyle supérieur à 2,
un acide organique (C), et
un polyisocyanate (D),
dans laquelle une teneur totale en groupes urée dans la composition de résine polyuréthane, telle que déterminée selon la description, est de 0,01 à 0,80 mmol/g par rapport à la somme de la masse du prépolymère d'uréthane terminé par un groupe isocyanate (E) et de la masse de l'allongeur de chaîne (G), et
dans laquelle le polycarbonate polyol (B) a un nombre moyen estimé de groupes fonctionnels de 2,0 à 3,90, tel que déterminé selon la description.

**18.** Cuir artificiel ou cuir synthétique comprenant : le produit durci de la composition de résine polyuréthane selon l'une quelconque des revendications 1 à 17.

**19.** Agent de traitement de surface pour cuir comprenant : le produit durci de la composition de résine polyuréthane selon l'une quelconque des revendications 1 à 17.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005247897 A
- JP 2021070799 A